# EUROPÄISCHE PATENTSCHRIFT

(11) **EP 2 600 755 B1**
(45) Veröffentlichungstag und Bekanntmachung des Hinweises auf die Patenterteilung: **07.01.2015**
(21) Anmeldenummer: 10745127.0
(22) Anmeldetag: 06.08.2010
(51) Int. Cl.: A47J 31/06, A47J 31/20

(54) **AUFSATZ FÜR EINEN TEEKRUG**
ATTACHMENT FOR A TEA KETTLE
GARNITURE POUR UNE THÉIÈRE

(43) Veröffentlichungstag der Anmeldung: 12.06.2013
(73) Patentinhaber: Dalla Piazza, Enrico, 5425 Schneisingen (CH)
(72) Erfinder: EIDENBENZ, Ruedi, FL-9495 Triesen (LI); TSE, Chi Ming, New Territories Hong Kong (CN)
(74) Vertreter: Stäbler, Roman
(86) Internationale Anmeldenummer: PCT/CH2010/000194
(87) Internationale Veröffentlichungsnummer: WO 2012/016340

(56) Entgegenhaltungen:
- CH-A1- 700 381
- DE-A1- 19 839 421

## Beschreibung

### Technisches Gebiet

Die Erfindung betrifft einen Aufsatz für einen Lösemittelbehälter zur zeitgesteuerten Zubereitung eines Extraktionsgetränks, insbesondere zum Brühen von Tee, mit einer Grundplatte zum Aufsetzen auf eine Öffnung des Lösemittelbehälters, wobei die Grundplatte einen Durchbruch für den Durchtritt eines Extraktionsgutbehälters aufweist, und eine Hebevorrichtung vorhanden ist, welche eine Hülse umfasst, an welcher der Extraktionsgutbehälter derart gehaltert ist, dass er an einem unteren Ende über die Hülse übersteht und durch eine obere Öffnung der Hülse mit einem Extraktionsgut befüllt werden kann, wobei die Hebevorrichtung eine grundplattenfeste Führungsvorrichtung aufweist, an welcher die Hülse in weitgehend grundplattensenkrechter Richtung im Sinne einer Linearführung zwischen einer unteren und einer oberen Position verschiebbar geführt ist, wobei die untere Position eine Brühstellung der Hülse definiert, in welcher der Extraktionsgutbehälter abgesenkt ist und die obere Position eine Ruhestellung definiert, in welcher der Extraktionsgutbehälter gegenüber der Brühstellung angehoben ist, und die Hebevorrichtung eine Verriegelungsvorrichtung zum Verriegeln der Hülse in der Brühstellung aufweist, und ein Zeitgeber vorhanden ist, welcher derart zur Betätigung der Verriegelungsvorrichtung ausgebildet ist, dass nach Ablauf einer vorgebbaren Zeitspanne die Hülse entriegelt wird, wenn sie in der Brühstellung verriegelt ist. Weiter betrifft die Erfindung einen Teekrug mit einem solchen Aufsatz, wobei der Zeitgeber ein Betätigungselement zum Einstellen einer Zeitspanne umfasst.

### Stand der Technik

Die US 2006/0288873 A1 (Yang Heng-Te) bezieht sich auf eine Vorrichtung zum zeitgesteuerten Zubereiten von Tee, womit nach vorbestimmter Zeit das Teekraut vom Tee getrennt werden kann. Dazu umfasst die Vorrichtung einen Grundkörper, welcher in auf einem Lösemittelbehälter aufgesetztem Zustand oben einen Zeitgeber umfasst, womit mittels einer Drehung um eine vertikale Achse eine Zeitspanne eingestellt werden kann. Gleichzeitig mit der Einstellung der Zeitspanne, insbesondere in einem ersten Betätigungsabschnitt des Zeitgebers, wird ein unter dem Grundkörper angeordneter Teebehälter nach unten geführt und in dieser Position verriegelt. Nach Ablauf der Zeitspanne wird der Teebehälter entriegelt, worauf der Teebehälter von einer Hebevorrichtung nach oben gefahren wird. Der Mechanismus der Hebevorrichtung bedingt dabei, dass der Teebehälter zum Befüllen von einem fest mit der Hebevorrichtung verbundenen Filterdeckel abgeschraubt werden muss, wozu die Vorrichtung vom Lösemittelbehälter abgenommen werden muss. Der gefüllte Teebehälter wird in der Folge wieder an den Filterdeckel geschraubt, worauf die Vorrichtung wieder auf den Lösemittelbehälter gesetzt werden kann. Damit ist die Handhabung der Vorrichtung umständlich, da die Befüllung des Teebehälters das Abnehmen der Vorrichtung vom Lösemittelbehälter bedingt, Zudem ist die Verschraubung des Teebehälters mit dem Filterdeckel oft schwierig zu bewerkstelligen und anfällig auf Verschmutzung durch in das Gewinde eindringende Teekraut.

Die DE 198 39 421 A1 (Gerber Jens Joerg) bezieht sich auf ein Kleinsieb, dessen Siebeinsatz nach einer am Siebdeckel einstellbaren Zeit durch einen mechanischen oder elektrischen Antrieb teleskopartig in einen geschlossenen Siebbehälter gezogen wird. Die Auf- und Abwärtsbewegung des Siebeinsatzes wird durch eine Schraubhülse mit innenliegendem Schraubgewinde und einem Schraubbolzen des Siebbehälters erreicht. Der Siebbehälter ist von oben her durch den Siebdeckel mit dem Teekraut befüllbar, während der Kleinsieb auf einen Lösemittelbehälter aufgesetzt ist. Die DE 198 39 421 A1 (Gerber Jens Joerg) bietet somit zwar ein komfortabel zu befüllendes Teesieb, weist aufgrund der helikalen Nut eine vergleichsweise aufwändige Konstruktion der Hebevorrichtung auf. Zudem ist aufgrund grosser Reibungsverluste in der Schraubhülse ein kraftvolles und damit aufwändiges Federwerk vorzusehen. Nicht zuletzt ist die Schraubhülse anfällig für Verschmutzung mit Teekraut, wodurch die Vorrichtung blockiert werden kann und somit allenfalls nicht zuverlässig funktioniert.

### Darstellung der Erfindung

Aufgabe der Erfindung ist es daher, einen dem eingangs genannten technischen Gebiet zugehörenden Aufsatz für einen Lösemittelbehälter zur zeitgesteuerten Zubereitung eines Extraktionsgetränks zu schaffen, welcher bei einfacher Handhabbarkeit kostengünstig und robust ist.

Die Lösung der Aufgabe ist durch die Merkmale des Anspruchs 1 definiert. Gemäss der Erfindung hat der Aufsatz für einen Lösemittelbehälter zur zeitgesteuerten Zubereitung eines Extraktionsgetränks, insbesondere zum Brühen von Tee, eine Grundplatte zum Aufsetzen auf eine Öffnung des Lösemittelbehälters, wobei die Grundplatte einen Durchbruch für den Durchtritt eines Extraktionsgutbehälters aufweist. Weiter ist eine Hebevorrichtung vorhanden, welche eine Hülse umfasst, an welcher der Extraktionsgutbehälter derart gehaltert ist, dass er an einem unteren Ende über die Hülse übersteht und durch eine obere Öffnung der Hülse mit einem Extraktionsgut befüllt werden kann. Die Hebevorrichtung umfasst dabei eine grundplattenfeste Führungsvorrichtung, an welcher die Hülse in weitgehend grundplattensenkrechter Richtung im Sinne einer Linearführung zwischen einer unteren und einer oberen Position verschiebbar geführt ist, wobei die untere Position eine Brühstellung der Hülse definiert, in welcher der Extraktionsgutbehälter abgesenkt ist und die obere Position eine Ruhestellung definiert, in welcher der Extraktionsgutbehälter gegenüber der Brühstellung angehoben ist. Weiter umfasst die Hebevorrichtung eine Verriegelungsvorrichtung zum Verriegeln der Hülse in der Brühstellung. Zudem ist ein Zeitgeber vorhanden, welcher derart zur Betätigung der Verriegelungsvorrichtung ausgebildet ist, dass nach Ablauf einer vorgebbaren Zeitspanne die Hülse entriegelt wird, wenn sie in der Brühstellung verriegelt ist. Erfindungsgemäss ist die Hülse in der Brühstellung längs der Linearführung von einer Rückstellkraft beaufschlagt, welche sie aus der Brühstellung in die Ruhestellung zurückstellt, wenn die Hülse entriegelt ist.

Die Grundplatte ist zum Aufsetzen auf den Lösemittelbehälter vorgesehen. Üblicherweise ist der Lösemittelbehälter während der Zubereitung auf einer horizontalen Unterlage angeordnet, damit das Lösemittel im Behälter bleibt. Ein oberer Auflagerand des Lösemittelbehälters, welcher die Öffnung zum Aufsetzen des Aufsatzes begrenzt, ist damit in der Regel ebenfalls weitgehend horizontal angeordnet, womit auch die Grundplatte typischerweise horizontal angeordnet ist. Natürlich kann die Grundplatte auch auf einen Lösemittelbehälter aufgesetzt werden, welcher sich auf einer schiefen Ebene befindet. In Sinne der somit in weitestem Sinne horizontalen Anordnung der Grundplatte auf dem Lösemittelbehälter wird im Weiteren mit relativen Begriffen wie "unten" und "oben" auf eine Anordnung des Aufsatzes in betriebsbereiter und horizontaler Anordnung auf einem Lösemittelbehälter Bezug genommen. Der Begriff "senkrecht" bezieht sich in diesem Sinne ebenfalls auf die weitgehend horizontal angeordnete Grundplatte und ist damit weitgehend gleichbedeutend mit "grundplattensenkrechte Richtung" oder "axial", soweit nichts anderes angegeben ist. Eine Richtung von oben nach unten ist dabei durch die Richtung der Schwerkraft definiert.

Die Grundplatte kann grundsätzlich eine weitgehend beliebige Form aufweisen, welche jedoch ein Aufsetzen auf die Öffnung des Lösemittelbehälters ermöglicht. Dabei ist eine Seite der Grundplatte in auf dem Lösemittelbehälter aufgesetztem Zustand dem Lösemittelbehälter zugewandt. In der Regel ist die Grundplatte im Wesentlichen eben ausgebildet und liegt am weitgehend gesamten Umfang der Öffnung auf dem Auflagerand des Lösemittelbehälters auf. Die nachfolgend beschriebenen Teile des Aufsatzes sind bevorzugt auf einer der Behälterseite gegenüberliegenden Seite der Grundplatte angeordnet.

Vorzugsweise weist die Grundplatte eine umlaufende Wandung mit einem radial auskragendem Rand zur Auflage des Aufsatzes auf dem Auflagerand des Lösemittelbehälters auf. Damit wird ein besonders stabiler Halt des Aufsatzes auf dem Lösemittelbehälter erreicht. Ist der auskragende Rand gegenüber der Grundplatte höher angeordnet, ist die Grundplatte in den Innenraum des Lösemittelbehälters abgesenkt angeordnet, womit der Schwerpunkt des Aufsatzes tief gehalten und somit ein besserer Halt erreicht wird. Der auskragende Rand kann zusätzlich auch Montagefläche für eine Abdeckung dienen (siehe weiter unten). Die Grundplatte kann aber auch ohne speziellen Rand ausgebildet sein und von oben her auf dem Auflagerand des Lösemittelbehälter aufliegen. In diesem Fall sind bevorzug nach unten überstehende Anschläge vorgesehen, welche ein radiales Verschieben des Aufsatzes bezüglich des Lösemittelbehälters verhindern.

Am Aufsatz können z. B. ein Clip-Verschluss oder andere Befestigungsmittel vorgesehen sein, um den Aufsatz auf dem Lösemittelbehälter zu fixieren. Schliesslich kann der Aufsatz nach Art eines Teekrugdeckels auch gelenkig mit dem Lösemittelbehälter verbunden sein. Vorzugsweise ist die Dimension des Aufsatzes einem dafür vorgesehenen Lösemittelbehälter angepasst. In einer Variante kann der Aufsatz aber auch so ausgebildet sein, dass unterschiedliche Lösemittelbehälter, insbesondere Krüge, Tassen etc. verwendet werden können. Hierzu kann beispielsweise eine konische Wandung am Umfang der Grundplatte vorgesehen sein, welche ein Aufstecken des Aufsatzes auf unterschiedliche Öffnungen erlaubt.

Der Durchbruch in der Grundplatte befindet sich vorzugsweise in der Ebene der Platte und schafft einen Durchtritt in axialer, d. h. grundplattensenkrechter, Richtung. Die Hebevorrichtung ist bevorzugt grundplattenfest am Durchbruch angeordnet, wobei die Hülse in weitgehend grundplattensenkrechter Richtung verschiebbar mit dem Durchbruch fluchtend angeordnet ist. Die Hebevorrichtung erlaubt somit ein Anheben bzw. Absenken des an der Hülse gehalterten Extraktionsgutbehälters in weitgehend grundplattensenkrechter Richtung durch den Durchbruch. Der Durchbruch ist hierzu derart dimensioniert, dass der Extraktionsgutbehälter und gegebenenfalls die Hülse ungehindert durch den Durchbruch verschoben werden können. Insbesondere weist der Durchbruch einen im Wesentlichen dem Umfang des Extraktionsbehälters bzw. der Hülse entsprechenden Umfang auf. Der Extraktionsgutbehälter und gegebenenfalls die Hülse können somit in axialer Richtung durch den Durchbruch hindurch treten, ohne dass umfangseitig ein wesentlicher Abstand zwischen Extraktionsgutbehälter bzw. Hülse und Umfang des Durchbruchs besteht.

Die Hülse ist an beiden Längsenden offen, bevorzugt zylinderförmig, insbesondere als gerader Kreiszylinder ausgebildet, dessen Längsachse koaxial mit einer Grundplattensenkrechten, bevorzugt mit einer Mittelsenkrechten der Grundplatte, angeordnet ist, wobei in diesem Fall ein Mittelpunkt des Durchbruchs ebenfalls mittig bezüglich der Grundplatte angeordnet ist.

Der Extraktionsgutbehälter ist derart an der Hülse gehaltert, dass er durch eine untere der Öffnungen der Hülse z. B. teleskopartig übersteht. Der Extraktionsgutbehälter ist oben offen, sodass er in an der Hülse gehaltertem Zustand durch die obere Öffnung mit einem Extraktionsgut wie z. B. Teekraut befüllt werden kann. Der Extraktionsgutbehälter kann somit auf komfortable Weise mit Teekraut befüllt werden, während der Aufsatz auf dem Lösemittelbehälter aufgesetzt ist.

Erfindungsgemäss umfasst die Hebevorrichtung zum axialen Anheben und Absenken eine grundplattenfeste Führungsvorrichtung, an welcher die Hülse in weitgehend grundplattensenkrechter Richtung im Sinne einer geradlinigen Linearführung zwischen einer unteren und einer oberen Position verschiebbar geführt ist. Die Führungsvorrichtung kann dabei z. B. grundplattenfeste Schienen oder Stangen umfassen, welche senkrecht zur Grundplatte angeordnet sind und an welchen Läufer der Hülse verschiebbar geführt sind. Die Führungsvorrichtung kann auch eine grundplattenfeste Führungshülse umfassen, in welcher die Hülse der Hebevorrichtung teleskopartig verschiebbar geführt ist.

Der Verschiebeweg der Hülse in der Führungsvorrichtung ist bevorzugt durch zwei Anschläge definiert. In auf einen Lösemittelbehälter aufgesetztem, betriebsbereitem Zustand des Aufsatzes definiert ein oberer Anschlag der Führungsvorrichtung eine Ruhestellung der Hülse und ein unterer Anschlag eine Brühstellung. Ist die gesamte Führungsvorrichtung auf der dem Lösemittelbehälter abgewandten Seite der Grundplatte angeordnet, so ist der untere Anschlag grundplattennah und der obere Anschlag grundplattenfern angeordnet. In der Ruhestellung ist die Hülse in der Führungsvorrichtung bis an den oberen Anschlag verschoben, womit der an der Hülse gehalterte Extraktionsgutbehälter durch den Durchbruch bezüglich der Grundplatte angehoben ist. In der Brühstellung ist die Hülse bis an den unteren Anschlag verschoben, sodass der Extraktionsgutbehälter durch den Durchbruch hindurch, in den Innenraum des Lösemittelbehälters hinein, abgesenkt ist.

Die Verriegelungsvorrichtung der Hebevorrichtung ist derart ausgebildet, dass die Hülse, wenn sie in die Brühstellung gebracht gelangt, vorzugsweise automatisch in dieser Stellung verriegelt wird. Der Zeitgeber ist derart ausgebildet und wirkt mit der Verriegelungsvorrichtung zusammen, dass er die Verriegelung nach Ablauf einer vorgebbaren Zeitspanne betätigen kann, wodurch die Hülse entriegelt wird. Der Zeitgeber kann dabei grundplattenfest angeordnet sein oder auf die Hülse z. B. als Deckel aufgesetzt bzw. in die Hülse integriert sein.

Erfindungsgemäss ist die Hülse in der Brühstellung längs der Linearführung von einer Rückstellkraft beaufschlagt. Auf diese Weise kann der an der Hülse gehalterte Extraktionsgutbehälter bei Entriegelung der Hülse durch den Zeitgeber nach Ablauf der vorgebbaren Zeitspanne auf einfache Weise automatisch aus dem Innenraum des Lösemittelbehälters ausgebracht bzw. angehoben werden. Insbesondere erlaubt die Linearführung eine möglichst direkte Wirkung der Rückstellkraft, wodurch zum Einen die Hebebewegung auf einfache Art bewerkstelligt werden kann. Zum Anderen ist eine vergleichsweise kleine Rückstellkraft ausreichend, da nur eine geradlinige Wirkung ohne wesentliche Reibungsverluste, wie sie bei schiefen oder helikalen Führungen auftreten, aufgebracht werden muss. Bevorzugt ist die Hülse über den gesamten Verschiebeweg von der Rückstellkraft beaufschlagt. Beim Absenken der Hülse von der Ruhestellung in die Brühstellung entgegen der Rückstellkraft kann somit die Betätigungsenergie zwischengespeichert werden und für eine Rückstellung entnommen werden. Aufgrund der geradlinigen Führung wird die Betätigungsenergie dabei optimal genutzt und kann bei maximalem wirksamen Hebeweg auch ebenso optimal wieder zur Rückstellung umgesetzt werden. Indem die Hebevorrichtung zudem eine Hülse umfasst, an welcher der Extraktionsgutbehälter wie oben beschrieben gehaltert ist, ergibt sich somit ein in jeder Stellung einfach zu befüllender Aufsatz für einen Lösemittelbehälter, welcher eine einfache und robuste Konstruktion aufweist.

Vorzugsweise wird die Rückstellkraft von einem elastischen Element bereitgestellt, das zwischen der Grundplatte und der Hülse wirkt. Das elastische Element umfasst vorzugsweise eine Feder, insbesondere eine Spiralfeder, bevorzugt eine Spiraldruckfeder. Damit wird eine besonders einfache und kostengünstige Realisierung der Rückstellkraft erreicht. Natürlich kann das elastische Element anders, zum Beispiel als Gummiband, Zugfeder, Schenkelfeder oder dergleichen ausgebildet sein. Eine Feder kann bezüglich der Hülse seitlich oder umlaufend angeordnet sein. Bei einer seitlichen Anordnung der Feder sind vorzugsweise mehrere, insbesondere mindestens zwei symmetrisch angeordnete Federn vorgesehen, so dass ein Verkannten der Hülse verhindert werden kann. Vorzugsweise umfasst der Aufsatz eine Federführung für die Feder, wobei ein Element der Führung mit der Hülse und ein weiteres Element mit der Grundplatte fest verbunden sind. Die Federführung ist vorzugsweise an der Führungsvorrichtung ausgebildet oder weist eine separate Linearführung auf. Bevorzugt umfasst die Hülse oder die Grundplatte einen axial orientierten Stift, welcher in den durch die Feder definierten Innenraum zumindest teilweise eingeführt ist. Die Grundplatte, respektive die Hülse umfasst bevorzugt eine Federführungshülse, in welche die Feder zumindest teilweise eingeführt werden kann. Damit wird eine robuste Führung der Feder gewährleistet, insbesondere kann damit ein Einknicken der Feder verhindert werden. Auf die Federführungshülse kann allerdings auch verzichtet werden.

Die Rückstellkraft könnte auch mittels eines Gegengewichts, insbesondere in Form einer Hebelführung bereitgestellt werden.

Vorzugsweise ist der Extraktionsgutbehälter in die Hülse einsetzbar und umfasst als einseitigen Anschlag in einem oberen Bereich einen Flansch. Damit kann der Extraktionsgutbehälter von einem Benutzer besonders gut ergriffen und von Hand aus der Hülse entnommen werden. Ebenso kann der Extraktionsgutbehälter vom Benutzer von oben her in einfachster Weise in die Hülse eingeführt werden. Dies ermöglicht eine einfache Verwendung des Aufsatzes und kommt insbesondere auch Benutzern entgegen, deren motorische Fähigkeiten reduziert sind, da zum Beispiel der Extraktionsgutbehälter nicht eingeschraubt oder anderweitig kompliziert befestigt werden muss. Vorzugsweise weist der Extraktionsgutbehälter im Bereich des Flanschs einen geringfügig grösseren Durchmesser auf als die Hülse, so dass der Extraktionsgutbehälter besonders gut ergriffen werden kann. Weiter kann der Flansch an der Aussenseite radial umlaufende Rillen umfassen, womit ein Abrutschen beim Ergreifen verhindert werden kann. Gegebenenfalls kann es auch ausreichen, wenn der Flansch nur abschnittsweise radial über die Hülse hinausragt. Der Extraktionsbehälter ist im Wesentlichen als einseitig geschlossener Kreiszylinder ausgebildet und umfasst in einem unteren Bereich, in der Grundfläche und/oder umfangseitig, Löcher, durch welche das Lösemittel ein- und ausfliessen kann. Dabei ist es von Vorteil, wenn der Extraktionsgutbehälter sowohl unten als auch seitlich Löcher aufweist, so dass bereits beim Eintauchen in das Lösemittel dasselbe den Innenraum des Extraktionsgutbehälters gut durchströmen kann. Der Extraktionsbehälter ist in der Hülse bevorzugt verdrehgesichert gehalten. Dies kann zum Beispiel mittels umfangseitig am Extraktionsgutbehälter, insbesondere unterhalb des Flanschs angeordneten, radial nach aussen ragenden Noppen und entsprechenden innwändigen Kerben im oberen Bereich der Hülse erreicht werden. Noppen und Ausnehmungen können natürlich auch vertauscht werden.

Der Anschlag kann zum Beispiel auch mittels einer Feder-Nut-Führung realisiert sein, wobei die Nut einen unteren Anschlag aufweist. Damit könnte gleichzeitig die Verdrehsicherung zwischen Extraktionsgutbehälter und Hülse realisiert werden.

Bevorzugt umfasst der Extraktionsgutbehälter ein Siebteil und ein Halteteil, wobei das Siebteil koaxial im Halteteil in mehreren axialen Positionen verrastbar ist. Der vorgenannte Anschlag ist in diesem Fall am Halteteil ausgebildet, welches somit in einer durch den Anschlag definierten Längsposition in die Hülse eingesetzt wird. Indem der Extraktionsgutbehälter in verschiedenen Längspositionen im Halteteil verrastbar ist, kann somit je nach Füllhöhe im Lösemittelbehälter eine Eintauchtiefe des Extraktionsgutbehälters angepasst werden. Insbesondere kann damit der Aufsatz auch für unterschiedlich dimensionierte Lösemittelbehälter verwendet werden. Das Einrasten kann beispielsweise mittels Rastnasen und Ausnehmungen erreicht werden.

Der Extraktionsgutbehälter kann auch in die Hülse einschraubbar ausgebildet sein, so dass die axialen Positionen mittels einer Drehung erreicht werden können, wobei die Position mittels Reibschluss oder Rastnasen in axialer Richtung fixiert ist. Halteteil und Siebtteil können allerdings auch als einstückiger Einsatz ausgebildet sein.

Der Extraktionsgutbehälter wird bevorzugt bei einem Übergang von der Ruhestellung in die Brühstellung der Hülse von oben her durch den Durchbruch abgesenkt. Die Komponenten der Hebevorrichtung sind dabei bevorzugt im Wesentlichen auf einer lösemittelbehälterabgewandten Seite der Grundplatte angeordnet. Der Extraktionsgutbehälter wird in diesem Fall von oben her in die Hülse eingesetzt, sodass er beim Absenken der Hülse in die Brühstellung durch den Durchbruch in den Innenraum des Lösemittelbehälters gelangt, wenn der Aufsatz auf einen Lösemittelbehälter aufgesetzt ist. Damit wird die Handhabung des Aufsatzes weiter vereinfacht, da bei auf dem Lösemittelbehälter aufgesetzten Aufsatz sowohl das Befüllen des Extraktionsgutbehälters als auch das Absenken vorgenommen werden kann, ohne dass der Aufsatz vom Lösemittelbehälter entnommen werden muss.

Vorzugsweise ist der Extraktionsgutbehälter direkt von einem Benutzer gegen die Rückstellkraft aus der Ruhestellung in die Brühstellung absenkbar, wo die Hülse automatisch verriegelt wird. Dazu übt der Benutzer eine im Wesentlichen in axialer Richtung orientierte Kraft auf den Extraktionsgutbehälter auf und führt denselben so entgegen der Rückstellkraft, welche zum Beispiel mittels einer Feder realisiert ist (siehe oben), nach unten. Die Hülse kann allerdings auch indirekt, zum Beispiel über einen zusätzlichen Betätigungshebel, in die Brühstellung abgesenkt werden.

Da der Extraktionsgutbehälter an der Hülse gehaltert ist, wird dieser mit der Hülse nach unten geführt, worauf die Verriegelungsvorrichtung die Hülse und damit auch den Extraktionsgutbehälter in der Brühstellung verriegelt. Mit der Betätigung durch den Benutzer wird vorzugsweise gleichzeitig die zur Überwindung der Rückstellkraft aufgewendete Betätigungsenergie in einem Energiespeicher gespeichert, welche später für das Anheben des Extraktionsgutbehälters nach Ablauf der Zeitspanne benötigt wird. Der Energiespeicher wird dabei durch das elastische Element bereitgestellt, z. B. eine Feder, welches die Rückstellkraft aufbringt. Der Energiespeicher speichert somit die Betätigungsenergie und erlaubt deren Entnahme zum Anheben der Hülse.

Bevorzugt sind bei dem Aufsatz sämtliche konstruktiven Elemente der Hebevorrichtung bezüglich der axialen Richtung ausserhalb der Hülse angeordnet. Das Teekraut kann somit ungehindert durch die Hülse in den Extraktionsbehälter eingebracht werden, ohne dass irgendwelche konstruktiven Teile der Hebevorrichtung das Befüllen behindern. Somit kann das Teekraut beim Befüllen des Extraktionsgutbehälters durch die Hülse auch nicht mit der Hebevorrichtung in Berührung kommen und diese beispielsweise verschmutzen bzw. schlimmstenfalls blockieren oder beschädigen. Bevorzugt kann die Hebevorrichtung somit vollständig in einem allfällig vorhandenen Hohlkörper (siehe unten) des Aufsatzes untergebracht werden, bevorzugt weitgehend verkapselt, im Aufsatz angeordnet werden, sodass die Hebevorrichtung auch vor allgemeinen Verschmutzungen, wie Staub etc., und gegebenenfalls vor Spritzwasser geschützt ist. Zudem kann die Hebevorrichtung auf diese Weise vor unsachgemässer Handhabung bzw. Manipulation geschützt werden und ist somit robust und kann platzsparend ausgebildet sein.

Bevorzugt umfasst die Führungsvorrichtung eine an der Grundplatte am Durchbruch vorhandene Führungshülse, an welcher die Hülse verschiebbar geführt ist, wobei ein Innenraum der Führungshülse mit dem Durchbruch der Grundplatte kommuniziert und bevorzugt in der Ruhestellung den Extraktionsgutbehälter wenigstens teilweise aufnimmt. Mittels einer solchen Führungshülse kann ein Verkanten der Hülse weitgehend unterbunden und eine optimal kontrollierte Längsführung gewährleistet werden. Die Führungshülse ist bevorzugt einstückig mit der Grundplatte ausgebildet, kann aber auch auf andere Weise mit der Grundplatte verbunden sein. Vorzugsweise ist die Hülse an der Führungshülse verdrehgesichert geführt. Dies kann beispielsweise mittels einer Stange und einem Gleiter erreicht werden. Die Stange kann axial orientiert, bevorzugt ausserhalb der Hülse, mit der Grundplatte verbunden sein, wobei die Hülse als Gleiter im unteren Bereich radial nach aussen ragende Vorsprünge mit Führungsöffnungen umfasst, wobei in diesen Öffnungen die Stange geführt werden kann. Damit kann gleichzeitig die Rückstellkraft realisiert werden, indem eine Schraubendruckfeder um die Stange angeordnet wird. Natürlich können die Stange auch mit der Hülse und der Gleiter mit der Grundplatte verbunden sein. Weiter kann die Führungshülse zum Beispiel auch eine Führungsnut und die Hülse eine entsprechend geformte Nase oder umgekehrt umfassen. Weiter kann die Führungshülse und die Hülse eine nicht kreiszylindrische Form, sondern zum Beispiel jeweils als Zylinder mit polygonaler oder ovaler Grundfläche ausgebildet sein, wobei die Führungshülse und der Extraktionsbehälter entsprechende Formen aufweisen. Damit kann gleichzeitig eine Verdrehsicherung der Hülse gegenüber der Führungshülse erreicht werden. Anstelle der Führungshülse können auch nur andere Führungsmittel vorgesehen sein. So können zum Beispiel Führungsstifte, Führungsschienen und/oder Teilkreiszylindermantel vorgesehen sein.

Vorzugsweise bildet die Hülse einen im Wesentlichen runden Rohrstutzen. Damit wird ein einfaches Einführen des Extraktionsgutbehälters in die Hülse ermöglicht. Durch die kreisrunde Ausbildung der Hülse wird nämlich ein grösstmöglicher Freiheitsgrad bezüglich einer axialen Rotation des Extraktionsgutbehälters beim Einführen desselben in die Hülse gewährleistet.

Bevorzugt ist die Hülse doppelwandig ausgebildet, wobei ein Zwischenraum zwischen der Doppelwand nach unten offen und nach oben weitgehend abgeschlossen ist. Die Hülse ist vorzugsweise derart über die Führungshülse gestülpt angeordnet, dass sich die Führungshülse zumindest in der Brühstellung im Zwischenraum zwischen der Doppelwand befindet. An der Aussenwandung kann so die Rückstellkraft angreifen, während der Extraktionsgutbehälter über die Innenwandung und den oberen Rand aufgenommen ist. Damit wird eine besonders einfache Übertragung der Rückstellkraft zwischen der Grundplatte und der Hülse erreicht. Die axiale Höhe der Führungshülse ist bevorzugt etwas höher als der Hubweg der Hebevorrichtung, so dass die Führung der Hülse in jeder Längsposition längs der Führung gewährleistet ist. Die Hülse muss allerdings nicht zwangsläufig umlaufend doppelwandig ausgebildet sein. Zum Beispiel kann die Doppelwandung nur bereichsweise vorgesehen sein oder die Hülse weist nur eine Innenwand auf und ist in der Führungshülse teleskopartig geführt.

Bevorzugt umfasst die Führungsvorrichtung grundplattenfeste Führungsschienen oder Führungsstangen, welche grundplattensenkrecht angeordnet sind und an welchen die Hülse mit nach aussen auskragenden, hülsenfest angeordneten, flanschartigen Vorsprüngen gleitend geführt ist. Damit wird alleine oder zusätzlich zur Führungshülse eine robustere Führung der Hülse erreicht.

Vorzugsweise weist die Verriegelungsvorrichtung ein Betätigungselement auf, welches derart ausgebildet und angeordnet ist, dass es, insbesondere in der Brühstellung der Hülse, mit dem Zeitgeber zusammenwirken kann. Die Verriegelungsvorrichtung umfasst hierzu bevorzugt ein mit der Grundplatte verbundenes und ein weiteres, mit der Hülse verbundenes Element, welches zur Verriegelung der Hülse bevorzugt ineinandergreifen. Vorzugsweise ist mindestens eines der Elemente als Betätigungselement ausgebildet bzw. mit einem Betätigungselement versehen und beweglich und/oder federnd gelagert. Die Elemente sind so ausgebildet und angeordnet, dass sie in verriegeltem Zustand eine Verschiebung der Hülse in der Längsführung zumindest in eine Richtung blockieren.

Die Verriegelungsvorrichtung weist vorzugsweise einen an der Grundplatte verankerten, insbesondere schwenkbar gelagerten, ersten Rasthaken auf, welcher derart angeordnet ist, dass er mit einem Rastelement der Hülse verrastet, wenn die Hülse in der Brühstellung ist, wobei vorzugsweise das Rastelement der Hülse einen zweiten Rasthaken umfasst, der insbesondere fest mit der Hülse verbunden, vorzugsweise angeformt ist, wobei insbesondere das Betätigungselement einen Hebelarm umfasst, welcher mit dem ersten Rasthaken verbunden ist. Damit wird eine besonders einfache Verriegelungsvorrichtung geschaffen. Der erste Rasthaken ist vorzugsweise in einem peripheren Bereich der Hülse und radial zu derselben verschwenkbar gelagert. Im Bereich der Schwenkachse, insbesondere über der Schwenkachse, umfasst der erste Rasthaken eine Rastnase, welche im Wesentlichen horizontal orientiert und welche auch bei abgesenkter Hülse ausserhalb der Hülse angeordnet ist. Der erste Rasthaken ist mit dem Betätigungselement verbunden, welches als länglicher Abschnitt, welcher im Wesentlichen axial orientiert ist, ausgebildet ist. Das Betätigungselement ist vorzugsweise so bezüglich des ersten Rasthakens radial nach innen versetzt, dass dieses bei abgesenkter Hülse zumindest teilweise zwischen den beiden Wänden der Hülse zu liegen kommt, wenn diese doppelwandig ausgeführt ist. Das Betätigungselement ragt also von der Schwenkachse axial nach oben. Die Hülse umfasst am unteren Rand der Aussenwand einen radial nach aussen stehenden zweiten Rasthaken, welcher tangential zur Hülse und horizontal orientiert ist und ist umfangseitig so platziert, dass er mit dem ersten Rasthaken in abgesenktem Zustand zusammenwirken kann, insbesondere die Hülse im abgesenkten Zustand verriegeln kann. Wird in diesem verriegelten Zustand das Betätigungselement verschwenkt, so wird die Hülse entriegelt und mittels der Rückstellkraft nach oben gefahren. Die Hülse kann auch einen Vorsprung oder eine Ausnehmung aufweisen, in welche ein auf der Grundplatte über eine tangentiale Achse schwenkbar gelagerter Rasthaken eingreifen kann. Dem Fachmann sind auch weitere Möglichkeiten bekannt, wie eine solche Verriegelungsvorrichtung bereitgestellt werden kann.

Vorzugsweise ist der erste Rasthaken derart mit einer Rückstellkraft beaufschlagt, dass das Rastelement der Hülse automatisch mit dem Rasthaken verrastet, wenn die Hülse in die Brühstellung gelangt. Der erste Rasthaken wird mittels einer Rückstellkraft in einer Ruheposition gehalten, welche einer Eingriffsposition im verriegelten Zustand entspricht. Die Rückstellkraft wird vorzugsweise mittels einer Feder, insbesondere mittels einer Schenkelfeder bereitgestellt. Damit wird eine einfache Bedienung des Aufsatzes ermöglicht, da die Verriegelung automatisch bei Erreichen der Brühstellung greift. Dem Fachmann sind zudem weitere elastische Elemente bekannt, welche ebenfalls zur Erzeugung einer Rückstellkraft geeignet sind (Gummiband, Zugfeder etc.).

Der erste und der zweite Rasthaken weisen eine als Steuerfläche wirkende Abschrägung auf, so dass bei Kontakt der Rasthaken der erste, schwenkbare Rasthaken gegen seine Rückstellkraft ausweicht und bei Erreichen der Brühstellung die Rasthaken einschnappen. Um die Hülse zu entriegeln, wird das Betätigungselement entgegen der Rückstellkraft verschwenkt, womit der erste Rasthaken, welcher an das Betätigungselement gekoppelt ist, aus der Eingriffposition über dem zweiten Rasthaken ausgeschwenkt und so der Eingriff der Rasthaken gelöst wird.

Bevorzugt weist der Zeitgeber ein Auslöseelement auf, welches während des Ablaufs der vorgebbaren Zeitspanne weitgehend kontinuierlich bewegt ist und nach Ablauf der vorgebbaren Zeitspanne derart mit dem Betätigungselement der Verriegelungsvorrichtung zusammenwirkt, dass die Hülse entriegelt wird, wenn sie in der Brühstellung verriegelt ist. Das Auslöseelement ist so ausgebildet und in betriebsbereiter Anordnung derart bezüglich dem Betätigungselement der Verriegelungsvorrichtung angeordnet, dass es bei Ablauf der vorgebbaren Zeitspanne das Betätigungselement entgegen dessen Rückstellkraft verschwenken, d. h. die Verriegelungsvorrichtung betätigen, und so die Hülse entriegeln kann.

Ein weitgehend kontinuierlich bewegtes Auslöseelement erlaubt eine konstruktiv einfache Ausbildung des Zeitgebers, da beispielsweise die Bewegung einer Minutenachse eines herkömmlichen Uhrwerks direkt auf das Auslöseelement übertragen werden kann. Die Betätigung der Verriegelungsvorrichtung nach Ablauf der vorgebbaren Zeitspanne erfolgt somit nur aufgrund einer geeigneten relativen Anordnung des Betätigungselements der Verriegelungsvorrichtung zur Bewegungsbahn des Auslöseelements. Es ist jedoch nicht ausgeschlossen, dass das Auslöseelement erst nach Ablauf der Zeitspanne bewegt wird. Je nach Zeitgeber kann die Bewegung auch in diskreten Schritten erfolgen. Das Betätigungselement kann in anderen Varianten auch fest, z. B. gelenkig, an den Zeitgeber bzw. an das Auslöseelement gekoppelt sein.

Bevorzugt reicht das Betätigungselement der Verriegelungsvorrichtung an einen oberen Randbereich der Hülse heran, wenn die Hülse in der Brühstellung ist. Dies ist insbesondere dann vorteilhaft, wenn der Zeitgeber, bevorzugt als abnehmbarer Deckel, auf die obere Öffnung des Extraktionsgutbehälters aufsetzbar ausgebildet ist. Indem das Betätigungselement in den oberen Randbereich der Hülse ragt, kann der Zeitgeber somit auf einfache Weise direkt im oberen Randbereich der Hülse mit der Verriegelungsvorrichtung zusammenwirken. Weitere funktionelle Teile der Verriegelungsvorrichtung können davon beabstandet im Bereich der Grundplatte ausgebildet sein, wo vergleichsweise viel Platz und gute Montagemöglichkeiten vorhanden sind. Zudem wird durch ein beispielsweise als länglicher Hebel ausgebildetes Betätigungselement, welches an der Grundplatte gelagert ist, erreicht, dass der Zeigeber, bzw. das Auslöseelement, aufgrund der Hebelwirkung nur eine kleine Kraft auf das Betätigungselement der Verriegelungsvorrichtung ausüben muss, um die Verriegelungsvorrichtung zu betätigen. Durch die Ausbildung des Zeitgebers als abnehmbarer Deckel wird ein besonders benutzerfreundlicher Aufbau erreicht, da der Zeitgeber z. B. bei einer Reinigung des Aufsatzes entnommen werden kann. Vorzugsweise ist der Deckel jederzeit, das heisst auch während des Brühvorgangs, wenn die vorgebbare der Zeitspanne abläuft, abnehmbar ausgebildet, falls z. B. Extraktionsgut nachgefüllt werden muss. Durch einen abnehmbar ausgebildeten Zeitgeber besteht weiter die Möglichkeit, denselben als Ersatzteil anbieten zu können, ohne dass in einem Schadensfall der ganze Aufsatz ausgetauscht werden muss.

Bevorzugt ist das Betätigungselement der Verriegelungsvorrichtung, insbesondere in der Brühstellung, zumindest teilweise im Zwischenraum zwischen den beiden Wänden einer doppelwandig ausgebildeten Hülse angeordnet, womit das Betätigungselement weitgehend verkapselt und vor unsachgemässer Handhabung sowie vor Verschmutzung geschützt ist.

Bevorzugt ist das Auslöseelement des Zeitgebers als rotierbares Element, insbesondere als einen um eine Rotationsachse rotierbar gelagerten Hebel ausgebildet. Während des Ablaufs der Zeitspanne rotiert das Auslöseelement in diesem Fall um die Rotationsachse, welche bei aufgesetztem Deckel bzw. Zeitgeber vorzugsweise axial, insbesondere koaxial zum Extraktionsgutbehälter angeordnet ist. Der Deckel umfasst vorzugsweise das Betätigungselement des Zeitgebers zum Einstellen einer gewünschten Zeitdauer, wobei das Betätigungselement bei aufgesetztem Deckel vorzugsweise als koaxial mit der Rotationsachse orientierter Drehschalter ausgebildet ist. Das Auslöseelement ist parallel in einem unteren Bereich des Deckels angeordnet und ragt über einen unteren Durchmesser des Deckels radial hinaus. Das Auslöseelement kann direkt mit der Bewegung des Drehschalters gekoppelt, oder aber zum Beispiel über ein Getriebe unter- oder übersetzt sein. Das Auslöseelement kann auch als in einer vertikalen Ebene rotierend gelagertes Element ausgebildet sein, welches in den oberen Randbereich der Hülse ragt und so das Betätigungselement betätigen kann. Der Zeitgeber muss jedoch nicht zwingend als Deckel ausgebildet sein, sondern kann auch z. B. fest auf der Grundplatte angeordnet sein. In diesem Fall ragt das Betätigungselement nicht bis zu einem oberen Randbereich der Hülse heran sondern liegt zweckmässig im Bereich einer Bewegungsbahn des Auslöseelements des Zeitgebers.

Vorzugsweise reicht das Betätigungselement der Verriegelungsvorrichtung in eine Aussparung in den oberen Randbereich der Hülse, in welcher auch das Auslöseelement des Zeitgebers angeordnet ist, wenn der Zeitgeber auf die Hülse aufgesetzt ist, wobei die Aussparung insbesondere nach oben offen ist, sodass das Auslöseelement nach oben aus der Aussparung ausgebracht werden kann, wenn der Zeitgeber von der Hülse abgenommen wird. Die Bewegungsbahn des Auslöseelements ist mit Vorteil auf den Bereich der Aussparungen beschränkt. Bevorzugt ist das Betätigungselement der Verriegelungsvorrichtung in der Brühstellung der Hülse in einem azimutalen Endbereich der Aussparungen angeordnet. Das Betätigungselement wird somit erst nach Ablauf der vorgebbaren Zeitspanne, d. h. am Ende der Bewegungsbahn, durch das Auslöseelement betätigt. Es versteht sich, dass die relative Anordnung des Betätigungselements am Ende einer Bewegungsbahn des Auslöseelements auch bei anderen Anordnungen der Verriegelungsvorrichtung und des Zeitgebers eine einfache Möglichkeit bietet, die Betätigung der Verriegelungsvorrichtung erst nach Ablauf der vorgebbaren Zeitspanne sicherzustellen.

Bei einer doppelwandigen Ausführung der Hülse ist die Aussparung bevorzugt nur an einer Innenwand der Hülse ausgebildet. Eine allfällige vorhandene Führungshülse der Führungsvorrichtung weist in diesem Fall mit Vorteil eine entsprechende Aussparung auf, welche vollständig überlappend mit der Aussparung der Hülse angeordnet ist, wenn die Hülse in der Brühstellung ist. Damit wird erreicht, dass das Auslöseelement des Zeitgebers innerhalb der Hülse angeordnet sein kann und das Betätigungselement der Verriegelungsvorrichtung ausserhalb der Führungshülse und dennoch ein Zusammenwirken der beiden Elemente möglich ist. Insbesondere kann das Auslöseelement in radialer Richtung sowohl über die Innenwand der Hülse und über die Führungshülse hinaus ragen und so in seiner Bewegungsbahn das Betätigungselement erfassen, wenn dieses z. B. zwischen den beiden Wänden der doppelwandig ausgebildeten Hülse angeordnet ist. In diesem Fall Ist das Betätigungselement vor externen Eingriffen weitgehend geschützt, womit eine Gefahr einer Beschädigung der Verriegelungsvorrichtung verringert werden kann. Ist das Betätigungselement ausserhalb der äusseren Hülsenwand angeordnet, erfasst die Aussparung bevorzugt auch die äussere Hülsenwand, sodass das Auslöseelement durch die Aussparung hindurchreichen und das Betätigungselement des Zeitgebers betätigen kann.

Vorzugsweise ist eine zum Aufsetzen auf den Lösemittelbehälter vorgesehen Seite der Grundplatte weitgehend eben ausgebildet und die gegenüberliegende Seite der Grundplatte von einer Kalotte überspannt, sodass sich zwischen Grundplatte und Kalotte ein Hohlkörper ergibt, in welchem die Komponenten der Längsführung und der Hebevorrichtung ganz oder teilweise untergebracht sind. Insbesondere setzt sich der Durchbruch der Grundplatte durch die Kalotte fort, sodass die Hülse im Bereich der durch die Längsführung gegeben Verschiebbarkeit, insbesondere in der Ruhestellung, nach oben aus der Kalotte austreten kann bzw. übersteht. Die kalottenförmige Abdeckung der Mechanik des Aufsatzes schützt letztere vor Beschädigung und gibt dem Aufsatz eine ästhetisch ansprechende Form. Die Kalottenform hat zudem den Vorteil, dass Wasserspritzer gut ablaufen und somit Verschmutzungen vermindert und die Reinigung vereinfacht wird. Da die Hülse in der Ruhestellung über die Kalotte übersteht, kann der Extraktionsgutbehälter besonders einfach von oben entnommen werden oder mit Extraktionsgut befüllt werden, wenn der Aufsatz auf einen Lösemittelbehälter aufgesetzt ist.

Durch den Überstand wird zudem erreicht, dass die Hülse als Betätigungselement zum Absenken des Extraktionsgutbehälters dient. Ein Benutzer drückt die Hülse mit allenfalls vorhandenem Deckel einfach in die Kalotte hinein, bis die Hülse in der Brühstellung verrastet. Es versteht sich, dass die Abdeckung nicht als Kalotte ausgebildet zu sein braucht, bevorzugt jedoch eine konvexe, im Wesentlichen rotationssymmetrische Form aufweist. Ist die Hülse in der Brühstellung verrastet, kann z. B. über das als Drehregler ausgebildete Betätigungselement des im Deckel angeordneten Zeitgebers die vorgebbare Zeitspanne eingestellt werden. Aufgrund der Rückstellkraft wird die Hülse geradlinig nach oben ausgefahren und ist für eine erneute Betätigung bereit.

Bevorzugt ist die Verriegelungsvorrichtung zusätzlich durch ein separates Bedienelement betätigbar, mit welchem eine Verriegelung der Hülse manuell gelöst werden kann, sodass ein Brühvorgang durch einen Benutzer vorzeitig abgebrochen werden kann. Vorzugsweise ist der Aufsatz im Wesentlichen aus Kunststoff gebildet, um eine hygienische Reinigung zu ermöglichen. Es versteht sich, dass Komponenten des Zeitgebers oder allfällig vorhanden Federn Metall umfassen können. Dem Fachmann ist dazu eine Vielzahl geeigneter Materialien geläufig.

Die Erfindung stellt auch einen Teekrug bereit, welcher einen Lösemittelbehälter und einen Aufsatz gemäss der obigen Beschreibung umfasst. Insbesondere ist der Aufsatz auf eine Öffnung des Lösemittelbehälters aufgesetzt, sodass in der Brühstellung der Hülse der Hebevorrichtung der Extraktionsgutbehälter in einen für ein Lösemittel, typischerweise Wasser, vorgesehenen Innenraum des Lösemittelbehälter abgesenkt ist, sodass der Extraktionsgutbehälter bei regulärer Füllmenge des Lösemittels in das Lösemittel eintaucht. In der Ruhestellung ist der Extraktionsgutbehälter weitgehend aus dem Innenraum ausgebracht. Dabei muss der Extraktionsgutbehälter jedoch nicht vollständig aus dem Innenraum ausgebracht sein, sondern ist bevorzugt wenigstens derart weit angehoben, dass bei regulärer Füllmenge der Innenraum des Extraktionsgutbehälters nicht mehr in das Lösemittel eintaucht.

In einem zweiten Aspekt betrifft die Erfindung, inner definiert durch die Merkmale des Anspruchs 1, auch unabhängig von den vorgenannten Ausführungsformen, einen weiteren Aufsatz für einen Lösemittelbehälter zur zeitgesteuerten Zubereitung eines Extraktionsgetränks, insbesondere einen Teekrug zum Brühen von Tee. Die Vorrichtung umfasst eine Grundplatte zum Aufsetzen auf einen Lösemittelbehälter, einen Extraktionsgut-Behälter sowie eine an der Grundplatte angebrachte Hebevorrichtung für den Extraktionsgut-Behälter, wobei die Hebevorrichtung derart ausgebildet und bezüglich des Lösemittelbehälters angeordnet ist, dass die Hebevorrichtung den Extraktionsgut-Behälter aus einem in einen Innenraum des Lösemittelbehälters abgesenkten Zustand anheben kann, wenn der Aufsatz auf den Lösemittelbehälter wie vorgesehen aufgesetzt ist. Weiter weist der zweite Aspekt eine Verriegelungsvorrichtung zum Ver- und Entriegeln der Hebevorrichtung bei abgesenktem Zustand des Extraktionsgut-Behälters auf, sowie einen Zeitgeber, welcher mit der Verriegelungsvorrichtung derart zusammenwirken kann, dass die Hebevorrichtung nach einer vorgegebenen Zeitspanne entriegelt wird. Der Zeitgeber weist dabei ein Betätigungselement mit einer Betätigungsrichtung zum Betätigen des Zeitgebers auf, wobei der Zeitgeber zudem einen mechanischen Energiespeicher zum Speichern einer am Betätigungselement aufgewendeten Betätigungsenergie umfasst und während der vorgegebenen Zeitspanne eine Entladung des Energiespeichers erfolgt. Dabei umfasst die Verriegelungsvorrichtung ein erstes Element und ein zweites Element, wobei während der Zubereitung des Extraktionsgetränks eines der beiden Elemente bezüglich des Lösemittelbehälters fest angeordnet ist und das andere bezüglich des Extraktionsgutbehälters fest angeordnet ist und das erste und das zweite Element so zusammenwirkend angeordnet sind, dass das erste Element durch das zweite Element während der vorgegebenen Zeitspanne in einer zweiten Betätigungsrichtung und nach Ablauf der vorgegebenen Zeitspanne in einer ersten Betätigungsrichtung beweglich geführt ist.

Damit ist ein weiterer Weg zu einem Aufsatz zur zeitgesteuerten Zubereitung eines Extraktionsgetränks geschaffen, welcher einfach zu bedienen und kostengünstig in der Herstellung ist.

Gemäss des zweiten Aspekts der Erfindung wird erreicht, dass gleichzeitig mit dem Betätigen des Betätigungselements des Zeitgebers in die erste Betätigungsrichtung der Extraktionsgut-Behälter in den Innenraum des Lösemittelbehälters abgesenkt sowie ein erster Teil des Energiespeichers geladen werden kann. Mit einer anschliessenden Betätigung des Betätigungselements des Zeitgebers in die zweite Betätigungsrichtung kann in der Folge ein weiterer Teil des Energiespeichers geladen sowie eine Zeitspanne beim Zeitgeber eingestellt werden. Dabei kann die erste Betätigungsrichtung von der zweiten verschieden sein, womit einem Benutzer intuitiv bereits aufgrund der Betätigungsrichtung klar ist, ob er mit der Betätigung des Betätigungselements des Zeitgebers den Extraktionsgut-Behälter absenkt oder den Zeitgeber aktiviert und auf eine Zeitspanne einstellt.

Weiter wird gemäss dem zweiten Aspekt erreicht, dass sowohl für das Absenken des Brühgutbehälters wie auch für die Einstellung der Zeitspanne dasselbe Betätigungselement des Zeitgebers betätigt werden kann. Damit werden der Aufbau sowie die Bedienung der Vorrichtung einfach und übersichtlich gehalten.

Durch die Führung des ersten durch das zweite Element gemäss des zweiten Aspekts wird zudem erreicht, dass das Betätigungselement des Zeitgebers sequentiell in die beiden Betätigungsrichtungen betätigt wird, womit beim Absenken des Extraktionsgut-Behälters nicht zugleich versehentlich eine Zeitspanne, respektive umgekehrt, eingestellt werden kann. Dies erleichtert insbesondere auch motorisch weniger feinfühligen Benutzern eine einfache und zugleich sichere Bedienung der Vorrichtung.

Umgekehrt wird dadurch auch eine sequentielle Entladung der beiden Teile des Energiespeichers ermöglicht, respektive kann eine parallele Entladung verhindert werden. Insbesondere können in den beiden Teilen des Energiespeichers unterschiedliche Energiemengen gespeichert werden, auf welche weitgehend unabhängig zugegriffen werden kann. Bevorzugt stellt je ein Teil des Energiespeichers die Energie für die Hebevorrichtung, respektive die Energie für den Zeitgeber bereit.

Gemäss des zweiten Aspekts ist während des Ablaufs der Zeitspanne mit der Verriegelungsvorrichtung auch der erste Teil des Energiespeichers verriegelt. Nach Ablauf der vorgebbaren Zeitspanne wird die im ersten Teil des Energiespeichers gespeicherte Energie freigegeben und der Hebevorrichtung zum Heben des Extraktionsgutbehälters zugeführt. Der zweite Teil des Energiespeichers des zweiten Aspekts stellt die Energie für den Zeitgeber zur Verfügung, welcher die im zweiten Energiespeicher gespeicherte Energie kontrolliert entnimmt und zur Messung der Zeitspanne nutzt, welche zwischen der Betätigung des Zeitgebers und dem Anheben des Extraktionsgut-Behälters ablaufen soll. Typischerweise muss daher im zweiten Teil des Energiespeichers weniger Energie gespeichert werden können als im ersten Teil des Energiespeichers.

Bevorzugt wird der Extraktionsgut-Behälter des zweiten Aspekts in betriebsbereiter Anordnung des Aufsatzes auf dem Lösemittelbehälter von der Hebevorrichtung derart weit aus einem Innenraum des Lösemittelbehälters ausgebracht, dass der Extraktionsgut-Behälter für die üblichen Füllstände bevorzugt vollständig aus dem Lösemittel herausgehoben ist. Damit kann das Extraktionsgetränk, insbesondere nach dem Abtropfen des Extraktionsguts, nicht mehr weiter aufkonzentrieren. In Varianten kann der Extraktionsgut-Behälter zu einem wesentlichen Teil aus dem Extraktionsgetränk gehoben werden, so dass sich das Extraktionsgetränk nur noch unwesentlich weiter aufkonzentriert. Der Extraktionsgut-Behälter des zweiten Aspekts kann aber auch teleskopartig ausgebildet sein, so dass eine Eintauchtiefe des Extraktionsgut-Behälters einem Füllstand des Lösemittels im Lösemittelbehälter angepasst werden kann. Dazu kann der Extraktionsgut-Behälter auf mindestens zwei diskrete Längen, oder auch stetig, auf beliebige Längen auseinandergezogen respektive zusammengestossen werden.

Gemäss des zweiten Aspekts sind sowohl der erste wie auch der zweite Teil des Energiespeichers mechanisch ausgebildet. Damit wird im Wesentlichen, abgesehen von einem allfällig notwendigen Erhitzen des Lösemittels, eine Unabhängigkeit von externen Energiequellen erreicht. Dies hat nicht nur zum Vorteil, dass damit in Abwesenheit von externen, beispielsweise elektrischen Energiequellen Extraktionsgetränke zubereitet werden können, sondern auch, dass der Aufsatz gefahrlos abgewaschen werden kann, ohne zum Beispiel mit einem Stromschlag oder einer Beschädigung der Vorrichtung rechnen zu müssen. Ferner wird damit ein einfacher und kostengünstiger Aufbau des Aufsatzes ermöglicht.

Vorzugsweise umfasst der mechanische Energiespeicher des zweiten Aspekts eine erste Feder, welche das Betätigungselement des Zeitgebers entgegen der ersten Betätigungsrichtung mit einer Federkraft beaufschlagt, so dass die erste Feder bei einer Betätigung des Betätigungselements des Zeitgebers in die erste Betätigungsrichtung gespannt wird. Damit wird ein kostengünstiger, einfacher und wartungsarmer Aufbau eines Energiespeichers erreicht. In einer besonders bevorzugten Ausführungsform erfolgt die Spannung der Feder durch, insbesondere geradliniges, Druckbeaufschlagen, was eine Bedienung durch einfache Bewegungen ermöglicht. Bevorzugt ist die Betätigungsrichtung geradlinig.

In einer Variante des zweiten Aspekts kann der mechanische Energiespeicher auch pneumatisch ausgebildet sein. Dazu könnte zum Beispiel ein Innenraum eines Druckbehälters mittels des Betätigungselements des Zeitgebers mit Über- oder Unterdruck beaufschlagt werden, wobei während der vorgegebenen Zeitspanne eine Entspannung des Behälterinnenraumes bis zum Erreichen des (ungefähren) Umgebungsdrucks erfolgt. Eine solche Konstruktion ist in der Regel jedoch aufwändiger als die Ausführung mit Federn, kann je nach Erfordernis jedoch eine bevorzugte Ausführung sein.

Bevorzugt ist die erste Feder des Energiespeichers des zweiten Aspekts als Schraubenfeder ausgebildet. Besonders bevorzugt sind dabei handelsübliche Schraubenfedern aus Federstahl, da diese in beinahe jeder denkbaren Form und mit beliebiger Federkonstante kostengünstig im Handel erhältlich sind. Schraubenfedern können durch ihre Geometrie auch besonders einfach und platzsparend in ein Gehäuse integriert werden, insbesondere können mehrere Schraubenfedern mit unterschiedlichem Durchmesser ineinander liegend angeordnet werden (Parallelschaltung), wobei ein so beanspruchtes Volumen höchstens demjenigen der grössten Feder entspricht. Eine Schraubenfeder ist besonders vorteilhaft, wenn die erste Betätigungsrichtung eine geradlinige Richtung aufweist. Eine Schraubenfeder muss dabei nicht zwingend aus Federstahl ausgebildet sein, sondern kann auch aus anderen Legierungen oder z. B. auch aus Kunststoff gefertigt sein. Statt der Schraubendruckfeder kann auch eine Schraubenzugfeder eingesetzt werden. Eine Schraubenzugfeder könnte zum Beispiel so angeordnet sein, dass ein oberer Bereich der Schraubenzugfeder mit einem oberen Bereich des Aufsatzes gemäss des zweiten Aspekts so verbunden ist, dass ein Extraktionsgutbehälter in diese bis zu einem an einem unteren Ende befindlichen Anschlag eingeführt werden kann und anschliessend durch Druckbeaufschlagen gespannt werden kann.

In ähnlicher Weise wie bei der obig beschriebenen Schraubenzugfeder können auch Gummibänder eingesetzt werden, welche in der Regel aber einen geringere Lebensdauer aufweisen als Schraubenfedern. Weiter können auch Blattfedern, z. B. als Spiralfeder aufgewickelt, zum Einsatz kommen. Grundsätzlich ist auch jeder andere Federtyp denkbar, wie beispielsweise Kegelfedern, Schenkelfedern, Tellerfedern und dergleichen, welche gesamthaft auch beliebig kombiniert werden können.

Bevorzugt umfasst der mechanische Energiespeicher des zweiten Aspekts eine zweite Feder, welche das Betätigungselement des Zeitgebers in der zweiten Betätigungsrichtung mit einer Federkraft beaufschlagt, so dass die zweite Feder bei einer Betätigung des Betätigungselements des Zeitgebers in die zweite Betätigungsrichtung gespannt wird.

Bei dem Energiespeicher des zweiten Aspekts, welcher über ein einzelnes Betätigungselement durch serielle Betätigung in zwei Betätigungsrichtungen geladen wird, ist es von Vorteil, für den ersten Teil und den zweiten Teil des Energiespeichers getrennte Federn einzusetzen. Das Laden und Entladen des Energiespeichers in die beiden Betätigungsrichtungen kann somit auf einfache Weise voneinander entkoppelt und die Betätigungsrichtungen somit unabhängig voneinander gewählt werden. Zudem können damit für die verschiedenen Betätigungsrichtungen verschiedene Federtypen oder zumindest Federn mit verschiedenen Federkonstanten eingesetzt werden. Damit wird weiter erreicht, dass je nach Betätigungsrichtung eine aufzuwendende Kraft durch die Wahl der Feder unterschiedlich eingestellt werden kann. Zum Beispiel kann damit der erste Teil des Energiespeichers des zweiten Aspekts für eine energetisch aufwändigere Aktion, wie zum Beispiel das Anheben des Extraktionsgut-Behälters, durch eine Schraubenfeder mit verhältnismässig grosser Federkonstante bereit gestellt werden, welche durch geradliniges Zusammenpressen gespannt wird. Anderseits kann zum Beispiel der zweite Teil des Energiespeichers des zweiten Aspekts für den Zeitgeber als kleinerer Energiespeicher ausgebildet sein, welcher zum Beispiel mittels einer Rotation eines Drehknopfes analog einer klassischen Eieruhr entgegen einer Feder mit einer geringeren Federkonstante geladen werden kann.

Als Variante kann beim zweiten Aspekt der Erfindung für beide Betätigungsrichtungen dieselbe Feder verwendet werden, d. h. die Feder ist Teil des ersten und des zweiten Teils des Energiespeichers. Dies ist aber im Allgemeinen aufgrund der unterschiedlichen Betätigungsrichtungen vergleichsweise kompliziert zu realisieren, da Federkräfte eines Federelements in der Regel in tangentialer und in axialer Richtung voneinander abhängig sind.

Vorzugsweise ist die zweite Feder des Energiespeichers des zweiten Aspekts als Torsionsfeder ausgebildet. Die Torsionsfeder ist geometrisch hierbei mit Vorteil im Wesentlichen als Schraubenfeder ausgebildet mit bevorzugt vernachlässigbar kleiner Federkonstante in axialer Richtung. Damit wird erreicht, dass die erste und die zweite Feder in der Vorrichtung dieselbe geometrische Ausrichtung, aber unterschiedliche Kraftwirkungen haben können. Damit wird ein kleinstmögliches Volumen in der Konstruktion erreicht, da zum Beispiel die Schraubenfeder einen geringeren Durchmesser als die Torsionsfeder aufweisen und damit z. B. koaxial innerhalb der Torsionsfeder angeordnet sein kann. Durch den Einsatz der Torsionsfeder wird weiter erreicht, dass die zweite Betätigungsrichtung, mit welcher der zweite Teil des Energiespeichers geladen wird, eine Rotationsbewegung sein kann. Grundsätzlich kann aber auch eine einzige Feder gleichzeitig als Schrauben- und Torsionsfeder eingesetzt werden, womit Kosten und Platz gespart, sowie die Komplexität des Aufbaus vereinfacht werden können. In diesem Fall wäre die Federkonstante in axialer Richtung nicht vernachlässigbar klein. Schliesslich können auch andere bekannte Torsionsfedertypen eingesetzt werden wie z. B. Spiralfedern.

Vorzugsweise umfasst das erste Element des zweiten Aspekts einen zylindrischen Abschnitt und ein vorstehendes Element, während das zweite Element als eine Führung ausgebildet ist. Der zylindrische Abschnitt des ersten Elements wirkt so mit dem als Führung ausgebildeten zweiten Element zusammen, dass der zylindrische Abschnitt axial bewegbar und gleichzeitig rotierbar ist. Damit kann das erste Element in beliebiger Reihenfolge in die erste und die zweite Betätigungsrichtung bewegt werden. Insbesondere wird dadurch auch eine gleichzeitige, überlagerte Bewegung in die erste und die zweite Betätigungsrichtung ermöglicht. Durch das vorstehende Element des ersten Elements und einer entsprechenden Führung am zweiten Element können die zulässigen Bewegungsrichtungen des ersten Elements definiert werden. Damit ist nicht ausgeschlossen, dass mehrere solche vorstehende Elemente mit jeweils entsprechender Führung angeordnet sein können, womit eine stabilere Führung erreicht würde.

Das vorstehende Element ist in einer besonders bevorzugten Ausführungsform des zweiten Aspekts als kammartiges Element, insbesondere als Zapfen und die Führung als Linearführung oder Nut mit zum Beispiel rechteckigem oder trapezförmigem Querschnitt, oder als einseitiger Anschlag oder abschnittsweise unterschiedlich ausgebildet. Weiter kann, insbesondere wenn in gewissen Stellungen eine Arretierung wünschenswert ist, eine Passfederkonstruktion vorgesehen sein. Je nach Richtung einer Kraftwirkung auf das erste Element, respektive falls ein anderweitiger Anschlag vorhanden ist, kann die Führung auch nur einseitig ausgebildet sein. Vorzugsweise weist die Führung mehrere, insbesondere bezüglich der beiden Betätigungsrichtungen genau zwei, Abschnitte auf. Ein erster und ein zweiter der beiden Abschnitte können dabei unterschiedliche Führungsrichtungen aufweisen, wobei einer der Abschnitte auch mehrere parallele Führungen umfassen kann. Aufgrund der mehreren Führungsabschnitte können mehrere Funktionen durch dasselbe Betätigungselement sequentiell gesteuert werden. Der erste Abschnitt ist dabei als Nut, insbesondere als mehrere parallel angeordnete Nuten, und der zweite als mindestens einseitiger Anschlag ausgebildet.

In einer Variante, um mit der Führung zusätzliche Stabilität der Konstruktion zu erreichen, wäre auch eine hinterschnittene Führung mit entsprechend geformtem Zapfen, wie zum Beispiel eine schwalbenschwanzähnliche Führung denkbar. Bei einer solchen Konstruktion muss aber beachtet werden, dass die Reibung nicht zu gross wird, insbesondere muss ein Verkanten der Führung weitgehend unterbunden werden können.

Vorzugsweise umfasst das als Führung ausgebildete zweite Element des zweiten Aspekts einen zylindrischen Abschnitt zur Führung des ersten Elements in der ersten Betätigungsrichtung und einen mindestens einseitigen Anschlag zur Führung des ersten Elements in der zweiten Betätigungsrichtung. Der zylindrische Abschnitt des ersten Elements wird dabei auf mehrere Arten geführt. Einerseits, durch das vorstehende Element und die Führung, insbesondere durch eine Nut wie oben beschrieben, und andererseits durch den zylindrischen Abschnitt der Führung, welcher passförmig mit dem zylindrischen Abschnitt des ersten Elements zusammenwirkt.

Der zylindrische Abschnitt der Führung und der zylindrische Abschnitt des ersten Elements ermöglichen eine beliebige helikale Verschiebung des ersten Elements, wobei das vorstehende Element eine Führung des ersten Elements in einer durch die Nut bestimmte Richtung, insbesondere in eine geradlinige oder helikale Richtung ermöglicht. Die Führung könnte auch durch axial gelagerte Stifte realisiert werden. Durch das vorstehende Element und die Nut kann also die ansonsten beliebige helikale Führung des zylindrischen Abschnittes des ersten Elements durch den zylindrischen Abschnitt der Führung teilweise eingeschränkt, insbesondere auf eine bestimmte helikale Bahn eingeschränkt werden. In Varianten können die beiden Betätigungsrichtungen durch einen zylindrischen Abschnitt oder beide durch einen mindestens einseitigen Anschlag geführt sein.

Bevorzugt umfasst das als Führung ausgebildete zweite Element des zweiten Aspekts mindestens eine Nut zur Führung des vorstehenden Elements des ersten Elements in der ersten Betätigungsrichtung. Die mindestens eine Nut kann als einseitiger Anschlag ausgebildet sein. In Varianten kann auf die Nuten und das vorstehende Element auch verzichtet werden, womit das erste Element in die erste Betätigungsrichtung ausschliesslich durch den zylindrischen Abschnitt der Führung geführt ist.

Vorzugsweise sind während der Zubereitung des Extraktionsgetränks das vorstehende Element des zweiten Aspekts bezüglich des Lösemittelbehälters und das als Führung ausgebildete zweite Element des zweiten Aspekts bezüglich des Extraktionsgutbehälters fest angeordnet. Damit werden auf einfache Weise die zulässigen Bewegungen des Extraktionsgutbehälters eingeschränkt bzw. festgelegt. Auch eine bezüglich des Extraktionsgutbehälters feste Anordnung des vorstehenden Elementes sowie bezüglich des Lösemittelbehälters feste Anordnung des als Führung ausgebildeten zweiten Elements ist denkbar.

Die erste Betätigungsrichtung gemäss des zweiten Aspekts ist vorzugsweise rechtwinklig zur zweiten Betätigungsrichtung ausgerichtet. Mit der ersten Betätigungsrichtung des Betätigungselements wird der Extraktionsgut-Behälter in das Lösemittel abgetaucht und mit der zweiten Betätigungsrichtung eine Zeitspanne eingestellt. Durch eine rechtwinklige Anordnung der beiden Betätigungsrichtungen können somit die beiden unterschiedlichen Funktionen, nämlich das Absenken des Extraktionsgut-Behälters und das Einstellen der Zeitspanne, optimal auseinander gehalten werden. Weiter wird damit eine Betätigung durch ein einziges Betätigungselement ermöglicht.

In Varianten sind auch andere Anordnung der beiden Bewegungsrichtungen zueinander denkbar. Die beiden Betätigungsrichtungen können beispielsweise einen Winkel einschliessen, welcher deutlich grösser oder kleiner als 90° ist, insbesondere können die beiden Betätigungsrichtungen auch antiparallel ausgerichtet sein. Schliesslich wäre auch ein über einen Betätigungsbereich nicht konstanter Winkel zwischen den Betätigungsrichtungen denkbar. Beispielsweise könnte die erste Betätigungsrichtung der Absenkungsrichtung des Extraktionsgut-Behälters entsprechen und die zweite Betätigungsrichtung durch einen Schieber oder einen Hebelarm, welcher zur Absenkungsrichtung zum Beispiel einen Winkel von 45° aufweist, definiert sein. Damit würde eine ergonomische Bedienung der Vorrichtung ermöglicht, insbesondere wenn die Vorrichtung gemäss des zweiten Aspekts auf Tischhöhe und beispielsweise vom Benutzer stehend bedient wird. Weiter wäre auch eine zur Absenkungsrichtung verschwenkte, insbesondere lineare Betätigungsrichtung denkbar, welche beispielsweise als Druckknopf ausgebildet sein könnte, welcher oberhalb eines Griffs des Lösemittelbehälters zur Bedienung mit dem Daumen angebracht ist. Schliesslich könnte eine Betätigungsrichtung auch helikal oder ähnlich verlaufen.

Bevorzugt ist die erste Betätigungsrichtung gemäss des zweiten Aspekts im Wesentlichen geradlinig, insbesondere vertikal geradlinig und die zweite Betätigungsrichtung ist im Wesentlichen als eine Rotation, insbesondere als Rotation um eine vertikale Achse, ausgebildet. Typischerweise muss für das Absenken des Extraktionsgut-Behälters eine grössere Kraft aufgewendet werden als für die Einstellung der Zeitspanne, womit eine geradlinige erste Betätigungsrichtung zweckmässig ist. Für eine Einstellung einer Zeitspanne ist eine Rotationsbewegung bevorzugt, da derartige Betätigungen eines Zeitgebers dem Benutzer z. B. von typischen Eieruhren bekannt ist. Diese beiden Bewegungsrichtungen sind einfach auseinanderzuhalten, woraus wiederum eine einfache Bedienung des Aufsatzes gemäss des zweiten Aspekts resultiert. Schliesslich benötigt der Zeitgeber auch nicht viel Energie, weshalb die im zweiten Teil des Energiespeichers gemäss des zweiten Aspekts zu speichernde Energie problemlos durch eine weniger kräftige Bewegung über eine kurze Strecke bereitgestellt werden kann.

In Varianten können die Betätigungsrichtungen auch anderweitig, insbesondere wie oben erwähnt, gewählt werden. Die erste Betätigungsrichtung könnte aber auch als Verschwenkung eines Hebelarms in einer beispielsweise vertikalen Ebene festgelegt sein, während die zweite Betätigungsrichtung durch eine Verschwenkung desselben Hebels in einer horizontalen Ebene definiert ist.

Vorzugsweise ist das vorstehende Element des ersten Elements des zweiten Aspekts mit dem Betätigungselement des zweiten Aspekts verbunden. Damit werden die Anzahl der bewegten Teile und die Komplexität des Aufbaus der Vorrichtung gering gehalten. In einer weiteren Ausführungsform kann das Betätigungselement auch zugleich die Funktion des Extraktionsgut-Behälters (oder umgekehrt) übernehmen, womit das vorstehende Element indirekt mit dem Betätigungselement verbunden ist.

Anderseits kann das vorstehende Element auch direkt mit dem Extraktionsgut-Behälter verbunden sein. Schliesslich ist auch eine Anordnung des vorstehenden Elements an einem weiteren, separaten Element, welches weder mit dem Betätigungselement noch mit dem Extraktionsgut-Behälter verbunden ist, denkbar.

Bevorzugt umfasst der Zeitgeber des zweiten Aspekts eine mechanische Hemmung. Diese kann auf bekannten Prinzipien beruhen, wie zum Beispiel einer mechanischen Uhrenhemmung, eine Fliehkraftbremse, einer herkömmlichen Bremsvorrichtung, Dämpfungsvorrichtung oder ähnlichem.

Die Hemmung kann aber auch elektrisch ausgebildet sein. Zum Beispiel könnte dazu eine elektrische Generatorbremse als Hemmung eingesetzt werden. Damit könnte eine Zeitspanne über einen Widerstand eingestellt werden. Weiter könnte auch ein Kondensator oder ein Akkumulator geladen werden, wobei die so gespeicherte Energie nach Ablauf der Zeitspanne für ein akustisches oder optisches Signal zur Verfügung stehen könnte. Dazu müssten die elektrischen Leiter und Bauteile gut gegen das Eindringen von Wasser abgedichtet sein, so dass die Vorrichtung bzw. der Aufsatz gefahrlos gereinigt werden kann. Damit würde aber der Aufbau kompliziert und teuer werden.

In einer bevorzugten Ausführungsform des zweiten Aspekts hemmt die mechanische Hemmung das Entladen des zweiten Teils des Energiespeichers, insbesondere ein Entspannen der zweiten Feder. Die Hemmung ermöglicht ein kontrolliertes Entspannen der zweiten Feder, respektive der Zeitgeberfeder, und damit den Ablauf der vorgebbaren Zeitspanne. In einer bevorzugten Ausführungsform wird die Widerstandskraft der mechanischen Hemmung so festgelegt, dass eine maximale Zeitspanne etwa der doppelten durchschnittlich einzustellenden Zeitspanne entspricht, womit einerseits eine Genauigkeit der Einstellung der Zeitspanne gewährleistet bleibt, aber dennoch möglichst die Bedürfnisse bezüglich der bevorzugten Zeitspannen der Benutzer berücksichtigt sind. Es ist zum Beispiel denkbar, dass gewisse Extraktionsgetränke eine Viertelstunde Ziehzeit benötigen, während andere bereits im Minutenbereich zubereitet sind. Die vorgebbare Zeitspanne kann dabei je nach Ausführung kontinuierlich oder diskret eingestellt werden. Dies kann einerseits durch die Wahl der Torsionsfeder des zweiten Aspekts, respektive der Zeitgeberfeder und andererseits durch die Wahl und/oder Einstellung der Hemmung erreicht werden.

In Varianten zu der oben beschriebenen mechanischen Hemmung des zweiten Aspekts, kann durch die oder durch eine weitere mechanische Hemmung auch ein Entladen des ersten Teils des Energiespeichers, insbesondere ein Entspannen der ersten Feder, gehemmt werden. Damit kann ein gedämpftes Anheben des Extraktionsgut-Behälters erreicht werden. Ferner kann auch ein herkömmliches mechanisches Aufziehwerk wie bei einer einfachen Eieruhr sowohl die zweite Feder, respektive die Zeitgeberfeder, wie auch die mechanische Hemmung umfassen.

Vorzugsweise umfasst die mechanische Hemmung des zweiten Aspekts der Erfindung ein während der Zubereitung des Extraktionsgetränks bezüglich des Lösemittelbehälters fest angeordnetes drehbares Element mit einer Bremseinrichtung, welches mit einem bezüglich des Extraktionsgutbehälters feststehenden Bereich zusammenwirkt und so ein Entspannen der zweiten Feder hemmt. Das drehbare Element ist vorzugsweise als gelagertes, scheibenförmiges Element ausgebildet und relativ zum Lösemittelbehälter fest angeordnet.

Die Bremseinrichtung kann dabei auf bekannte Art und Weise ausgebildet sein. So kann zum Beispiel die Lagerung des drehbaren Elements mit einer Gleitreibung beaufschlagt sein, so dass eine Drehung des drehbaren Elements gehemmt ist. Damit wird eine besonders einfache und kostengünstige Hemmung erreicht. Weiter kann die Bremse auch als eine Hemmung analog der einer Uhr, oder als Fliehkraftbremse ausgebildet sein.

Die Hemmung des zweiten Aspekts kann in Varianten, in einem einfachen Fall als Reibungsbremse mit einem Bremsklotz, welcher mit einer Fläche des Extraktionsgutbehälters zusammenwirkt, ausgebildet sein. Damit wird eine einfache und zugleich kostengünstige Konstruktion erreicht. Schliesslich ist auch eine pneumatische oder hydraulische Dämpfung, ähnlich der einer Federdämpfung bei einem Fahrzeug, anwendbar, wobei die Dämpfung direkt mit der Feder zusammenwirkt.

Bevorzugt umfasst die mechanische Hemmung gemäss des zweiten Aspekts ein Zahnrad und eine Bremseinrichtung. Das Betätigungselement weist dazu im feststehenden Bereich Aussparungen oder eine Profilierung auf, insbesondere in der Form eins Zahnstangenprofils. Das Zahnrad, die Bremseinrichtung und die Aussparungen sind nun derart zusammenwirkend angeordnet, dass sie eine Bewegung des Betätigungselements in die zweite Betätigungsrichtung, insbesondere das Entspannen der zweiten Feder, hemmt. Durch eine solche Konstruktion werden eine sichere Kraftübertragung und damit eine diesbezüglich präzise Zeitspanneneinstellung erreicht. Die Hemmung kann dabei über eine Silikon-Lagerung einer Achse des Zahnrades erfolgen.

In Varianten umfasst die mechanische Hemmung des zweiten Aspekts ein scheibenförmiges Element mit einem umlaufenden, mit dem feststehenden Bereich in Kontakt stehenden Rand mit relativ hohem Reibungskoeffizient auf. Damit wird, insbesondere bei einer Verwendung einer eine grosse Federkonstante aufweisenden zweiten Feder, einem Gleiten des scheibenförmigen Elements auf dem feststehenden Bereich verhindert, was eine Verfälschung der eingestellten Zeitspanne zur Folge hätte. Eine hohe Haftreibung zwischen dem umlaufenden Rand und dem feststehenden Bereich kann durch die Wahl von geeigneten Materialien erfolgen, wie zum Beispiel Gummi für den umlaufenden Rand und Kunststoff für den feststehenden Bereich. Damit wird erreicht, dass der feststehende Bereich nicht speziell verarbeitet werden muss, da Gummi mit den meisten Kunststoffen und Metallen, respektive Legierungen hohe Haftreibung ausbildet.

Die vorgebbare Zeitspanne des zweiten Aspekts ist bevorzugt über einen Auslenkungsweg des Betätigungselements in die zweite Betätigungsrichtung einstellbar. Damit kann klar zwischen dem Absenken des Extraktionsgut-Behälters und dem Einstellen einer Zeitspanne unterschieden werden. Allerdings ist grundsätzlich auch eine Einstellung der Zeitspanne über ein weiteres, separates Betätigungselement denkbar.

Vorzugsweise ist die mechanische Hemmung des zweiten Aspekts überbrückbar, insbesondere über ein weiteres Betätigungselement ausschaltbar ausgebildet. Dies ist insbesondere dann von Vorteil, wenn eine zu grosse Zeitspanne eingestellt wurde, oder aus sonstigen Gründen die Zubereitung des Extraktionsgetränks vorzeitig abgebrochen werden soll. In diesem Fall kann mit dem weiteren Betätigungselement die Hemmung überbrückt werden, womit sich die zweite Feder, respektive die Zeitgeberfeder, wieder entspannt und die vorgegebene Zeitspanne auf Null steht. Dies wird bevorzugt dadurch bewerkstelligt, dass ein Zusammenwirken zwischen dem drehbaren Element und der Hemmung unterbrechbar ausgebildet ist. Die mechanische Hemmung ist dazu mittels des weiteren Betätigungselements axial, entgegen einer Federkraft verschiebbar auf einer Achse so gelagert, dass bei ausbleibender Betätigung des weiteren Betätigungselements das Zahnrad mit dem Zahnstangenprofil zusammenwirkt, womit das Entspannen der zweiten Feder, respektive die Zeitgeberfeder, gehemmt bleibt und bei Betätigung des weiteren Betätigungselements das Zahnrad nicht mit dem Zahnstangenprofil zusammenwirkt, womit das Entspannen der zweiten Feder, respektive die Zeitgeberfeder, nicht mehr durch die Hemmung gehemmt ist. Dies kann im zweiten Aspekt der Erfindung dadurch erzielt werden, dass ein weiteres Zahnrad als Bindeglied zwischen den Aussparungen und dem axial verschiebbar angeordneten Zahnrand vorgesehen ist. In dieser Ausführungsform wird durch die Betätigung des weiteren Betätigungselements das axial verschiebbar angeordnete Zahnrand vom weiteren Zahnrad entkoppelt, womit die Bremswirkung, welche ausschliesslich auf das verschiebbar angeordnete Zahnrand wirkt, überbrückt ist. Es kann auch der Kontakt zwischen dem drehbaren Element und dem Zahnstangenprofil unterbrechbar ausgebildet sein. Dazu kann das Betätigungselement beispielsweise eine Nut rechtwinklig zu einer Drehachse des drehbaren Elements und über oder unter dem Aussparungen aufweisenden Bereich aufweisen, so dass bei einer Betätigung des weiteren Betätigungselements das gehemmte Zahnrad axial in den Bereich der Nut versetzt würde und damit nicht mehr mit dem Zahnstangeprofil zusammen wirken würde.

In einer Variante kann auf eine überbrückbare mechanische Hemmung auch verzichtet werden, insbesondere wenn ohne Gefahr einer Beschädigung die zweite Feder von Hand wieder entspannt werden kann.

Bevorzugt wird beim Anheben des Extraktionsgutbehälters des zweiten Aspekts ein federndes Element gespannt, welches beim Spannen oder beim Entspannen ein Klangkörper anschlägt und damit ein Signalton auslöst. Bevorzugt weist die Vorrichtung dazu eine Glocke auf, welche während der Zubereitung relativ zu der Grundplatte fix angeordnet ist und ein federndes Element zum Anschlagen der Glocke, welches bezüglich des Extraktionsgut-Behälters fix angeordnet ist. Der Einfachheit halber ist das federnde Element einstückig mit der Führung ausgeformt. Das vorstehende Element beschreibt während dem Anheben des Extraktionsgut-Behälters eine Bahn, in welcher sich das federnde Element befindet. Nun wird gleichzeitig zum Anheben des Extraktionsgut-Behälters das vorstehende Element durch die Führung geführt, womit das vorstehende Element mit dem federnden Element in Kontakt kommt, wodurch das federnde Element die Glocke anschlägt. Durch die federnde Ausbildung wird das Anheben des Extraktionsgut-Behälters nicht unterbrochen. Dies hat den Vorteil, dass für den Signalton Energie vom ersten, insbesondere vom grösseren Teil des Energiespeichers, bezogen werden kann.

Weiter kann auch in einem Feld mechanisch die Farbe gewechselt werden, oder die verbleibende Zeitspanne über eine Anzeige, ähnlich der einer Waage angegeben werden. Die Glocke kann auch direkt durch das vorstehende Element anschlagbar angeordnet sein, wobei in diesem Fall die Glocke vorzugsweise federnd gehaltert ist. Weiter kann unter Umständen auch gänzlich auf die Signalisierung verzichtet werden.

Bevorzugt ist der Extraktionsgut-Behälter gemäss des zweiten Aspekts lösbar an der Hebevorrichtung gehaltert. Damit wird ein einfaches Befüllen und Entleeren des Extraktionsgut-Behälters erreicht sowie ein ergonomisches Reinigen desselben ermöglicht. Der Extraktionsgut-Behälter des zweiten Aspekts kann eine Einrastvorrichtung aufweisen, welche ihn in axialer Richtung soweit arretiert, dass bei einem Absenken desselben dieser nicht aus der Halterung gehoben wird aber ein Benutzer diesen trotzdem mühelos aus der Halterung entnehmen kann. Dies kann zum Beispiel durch einen Bajonettverschluss, eine konische Ausbildung des Extraktionsgut-Behälters und einer entsprechend geformten Aufnahme, womit eine Kraftschlüssige Verbindung erreicht werden kann, einen Clip-Verschluss oder ähnliches erreicht werden. Weiter besteht durch die lösbare Halterung des Extraktionsgut-Behälters die Möglichkeit zur Verwendung von Wegwerf-Einsätzen. Vorzugsweise ist der Extraktionsgut-Behälter in die Hebevorrichtung einsteckbar ausgebildet.

In Varianten ist der Extraktionsgut-Behälter fest mit der Hebevorrichtung verbunden, womit der Aufbau weiter vereinfacht werden kann. Dies hätte aber den Nachteil, dass der Extraktionsgut-Behälter nicht separat abgewaschen werden könnte. Weiter kann auch die Hebevorrichtung mit verbundenem Extraktionsgut-Behälter als Ganzes lösbar in der Vorrichtung integriert sein.

Der Extraktionsgut-Behälter gemäss des zweiten Aspekts ist bevorzugt im Wesentlichen als Zylinder ausgebildet, welcher zumindest am Zylinderboden eine Vielzahl von Löchern, insbesondere ein Sieb oder ein Netz aufweist, welche in abgesenktem Zustand ein Durchströmen des Lösemittels ermöglichen. Dabei kann auch ein Filtereinsatz vorgesehen sein, so dass feine, im Lösemittel unlösliche Partikel des Extraktionsgutes nach Ablauf der Zeitspanne nicht im Lösemittel respektive im Lösemittelbehälter verbleiben. Zweckmässig wird dazu in einem Bereich einer oberen Grenze der tolerierbaren Partikelgrösse und einer unteren Grenze des Volumenstromes durch die Löcher optimiert. Dazu wird weiter die Grösse der löcheraufweisenden Oberfläche, die Löcherdichte (Anzahl Löcher pro Flächeneinheit) sowie die Grösse der Löcher aufeinander abgestimmt. Es ist auch denkbar verschiedene Extraktionsgut-Behälter vorzusehen, welche dem jeweiligen Extraktionsgut angepasst sind. Insbesondere kann der Extraktionsgut-Behälter zweiteilig, umfassend ein rohrstutzenförmiges Halteteil und ein im Wesentlichen die Form eines einseitig geschlossenen Hohlzylinders aufweisendes Siebteil, welches in das Halteteil einführbar ist, ausgebildet sein, womit lediglich das Siebteil auswechselbar ausgebildet sein kann. So könnten zum Beispiel ein Extraktionsgut-Behälter, respektive nur das Siebteil geeignet zur Aufnahme eines handelsüblichen Kaffeefilters und ein anderer zur Aufnahme von Tee ausgebildet sein. Dazu kann der Extraktionsgut-Behälter auch wenige, dafür grossflächig ausgebildete Öffnungen aufweisen. Der Extraktionsgut-Behälter kann auch ausschliesslich zur Aufnahme von Filter ausgebildet sein.

Alternativ oder zusätzlich wäre eine Rückschlagventilvorrichtung zum ausschliesslichen erleichterten des Einlasses des Lösemittels in den Extraktionsgut-Behälter auch eine denkbare Ausführungsform des Extraktionsgut-Behälters, wobei dazu entweder handelsübliche Kugelrückschlagventile, oder eine mit einer Federkraft beaufschlagte, gelenkig im Innenraum mit dem Extraktionsgut-Behälter verbundene Klappe verwendet werden könnte. Es ist auch denkbar den Extraktionsgut-Behälter mit seitlich verlaufenden Schlitzen oder Bohrungen zu versehen. Die Schlitze können dabei horizontal, axial oder helikal ausgerichtet sein. Weiter können die Schlitze ähnlich wie bei einer Gemüseraffel ausgerichtet sein, das heisst, sie können eine Strömungsrichtung, die nicht gegen die Rotationsachse des Extraktionsgut-Behälters gerichtet ist, gerichtet sein. Damit wird beim Ein- und Ausströmen des Lösemittels eine Verwirbelung desselben erreicht, womit ein schnelles Wegführen des gelösten Extraktes von der Oberfläche des Extraktionsgutes und damit eine effiziente Extraktion erreicht werden. Eine solche Verwirbelung kann auch durch Strombrecher im Innern des Extraktionsgut-Behälters erzeugt oder unterstützt werden. Dies hätte aber wiederum den Nachteil, dass die Reinigung desselben erschwert würde. Der Extraktionsgut-Behälter kann auch pyramidenförmig, als Pyramidenstumpf oder ähnlich ausgebildet sein.

Bevorzugt umfasst das Betätigungselement des zweiten Aspekts einen Zylindermantel zur Aufnahme des Extraktionsgut-Behälters. Der Zylindermantel weist dazu einen Innendurchmesser im Bereich des Aussendurchmessers des Extraktionsgut-Behälters auf. Weiter weist der Extraktionsgut-Behälter vorzugsweise einen auskragenden Rand auf, welcher eine Position desselben in axialer Richtung fixiert und zugleich ein herausnehmen des Extraktionsgut-Behälters erleichtert, wobei letzteres durch am auskragenden Rand zusätzlich radial über den Zylindermantel abstehende Teile weiter erleichtert werden kann. Vorzugsweise ist der Extraktionsgut-Behälter des zweiten Aspekts verdrehgesichert gehaltert. Dies kann zum Beispiel durch die Materialwahl oder durch eine Profilierung, insbesondere durch axial ausgebildete Rillen, der in Kontakt stehenden Flächen bewerkstelligt werden.

Vorzugsweise besteht der Extraktionsgut-Behälter des zweiten Aspekts aus zwei Teilen, nämlich einem Zylindermantel mit auskragendem Rand und einem zylindrischen Gefäss, welches aussenseitig, bevorzugt an einem oberen Rand, mehrere federnde Teile aufweist, welche vorzugsweise symmetrisch über den Umfang des Gefässes angeordnet sind. Der Zylindermantel weist dazu an der Innenwand mehrere, aber vorzugsweise zwei umlaufende rillenförmige und/oder profilförmige Aufnahmen für die federnden Teile auf. Damit wird erreicht, dass das zylindrische Gefäss höhenverstellbar in dem Zylindermantel gehaltert ist. Wird das zylindrische Gefäss in den Zylindermantel geschoben, respektive aus diesem herausgezogen, so rasten die federnden Teile ein, womit das zylindrische Gefäss so axial fixiert ist, dass es nur unter erhöhtem, aber für den durchschnittlichen Benutzer aufbringbarem Kraftaufwand aus der Verrastung gelöst und allfällig axial verschoben und in einer anderen Höheneinstellung wieder eingerastet werden kann. Durch diese axial verschiebbare Ausbildung des zylindrischen Gefässes kann die Vorrichtung für verschiedene, insbesondere ein kleines (zum Beispiel ca. 0.7L) und ein grosses (zum Beispiel ca. 1.2L) Lösemittelvolumen verwendet werden. Damit kann bei kleinem Lösemittelvolumen der Extraktionsgut-Behälter teleskopartig auseinandergezogen und bei grossem zusammengestossen werden. Damit wird bei den entsprechenden Volumina gewährleistet, dass bei abgesenktem Extraktionsgut-Behälter dieser auch wirklich im Lösemittel eintaucht, respektive bei angehobenem Extraktionsgut-Behälter dieser nicht oder höchstens unwesentlich in das Lösemittel eintaucht.

Der Zylindermantel des zweiten Aspekts ist dabei vorzugsweise doppelwandig ausgebildet, so dass die erste Feder zwischen den Wänden aufgenommen werden kann. Damit wird erreicht, dass die Feder während der Zubereitung des Extraktionsgetränks nicht sichtbar ist und damit auch ein diesbezügliches Verletzungsrisiko verringert werden kann.

Statt des Zylindermantels sind auch andere Aufnahmen denkbar. So könnten zum Beispiel auch drei oder mehr Finger zu deren Halterung vorgesehen sein.

Vorzugsweise wirkt der Zylindermantel des zweiten Aspekts mit der ersten und der zweiten Feder zusammen. Damit kann der Extraktionsgut-Behälter unabhängig von der Position des Betätigungselements entfernt respektive eingesetzt oder ersetzt werden.

In Varianten, insbesondere bei einer Ausführungsform mit fix mit der Hebevorrichtung verbundenem Extraktionsgut-Behälter, können die erste und die zweite Feder auch direkt mit dem Extraktionsgut-Behälter verbunden sein. Aber auch ein indirektes Zusammenwirken der Federn und des Zylindermantels oder des Extraktionsgut-Behälters ist denkbar.

Die Erfindung umfasst auch einen Teekrug, welcher einen Lösemittelbehälter sowie einen Aufsatz gemäss des ersten oder des zweiten Aspekts der Erfindung aufweist. Der Lösemittelbehälter weist bevorzugt eine teekannenähnliche und damit eher klassische rundliche Form auf, da damit eine Reinigung desselben vereinfacht wird. Im Übergang vom Kannenkörper zur Tülle kann ein Filter oder ein Sieb zum Rückhalten von unerwünschten Extraktionsgutrückständen angeordnet sein. Dies ist insbesondere dann von Vorteil, wenn der Extraktionsgutbehälter eher grob filternd ausgebildet ist, was wiederum ein Durchströmen des Extraktionsgutes fördert.

Der Lösemittelbehälter ist bevorzugt aus temperaturbeständigem Kunststoff oder aus Glas ausgebildet. Dazu kommen eine Vielzahl von Kunststoffen insbesondere aus der Klasse der Duroplaste in Frage. Nicht abschliessend seien hierzu PF (Phenolformaldehydharzen), MF/MP (Melamin-/Melamin-Phenolharze), UF (Harnsstoffharze), UP (ungesättigte Polyesterharze), EP (Epoxidharze), Si (Silikonharze), DAP/DIAP (Diallylphthalatharze/Diisoallylphthalatharze) erwähnt. Der Einsatz von Kunststoff für den Lösemittelbehälter hat den Vorteil, dass eine Produktion kostengünstig und einfach ist. Weiter kann dadurch das Gewicht der Vorrichtung gering gehalten werden.

In Varianten können auch andere Materialien wie zum Beispiel Metalllegierungen (zum Beispiel Stahl, Chromstahl, Emaille) dazu verwendet werden, insbesondere wenn das Lösemittel direkt im Lösemittelbehälter auf einer Heizplatte aufwärmbar sein soll. Die Verwendung von Porzellan, Keramik ist auch denkbar.

Der Lösemittelbehälter kann auch eine nicht klassische Form aufweisen, insbesondere kann er zum Beispiel eine moderne oder ausgefallene Form aufweisen, welche einem gänzlich anderen Gegenstand ähnelt. Eine Ausführungsform des Lösemittelbehälters mit einer rohrförmigen Tülle ist dabei auch denkbar. Damit wird erreicht, dass im unteren Teil der Kanne konzentriert vorliegende Farbstoffe und Aromen als erste ausgegossen und allfällig aufschwimmende Rückstände des Extraktionsgutes zurückgehalten werden. In einer weiteren Ausführungsform kann die Tülle auch oben, im Bereich des Lösemittelbehälterrandes angesetzt sein, um beim Ausgiessen abgesetzte Rückstände zurückzuhalten.

Weiter wird gemäss dem zweiten Aspekt der Erfindung auch ein Verfahren zur zeitgesteuerten Zubereitung eines Extraktionsgetränks geschaffen, bei welchem ein Betätigungselement in zwei verschiedene Betätigungsrichtungen betätigt wird, wobei durch die erste Betätigungsrichtung ein Extraktionsgut-Behälter in den Innenraum des Lösemittelbehälters abgesenkt sowie ein erster Teil eines Energiespeichers geladen und in die zweite Betätigungsrichtung wird eine Zeitspanne vorgegeben und der Zeitgeber aktiviert sowie ein zweiter Teil des Energiespeichers geladen wird. Grundsätzlich kann das Betätigungselement in die beiden Betätigungsrichtungen sequentiell oder parallel betätigt werden. Bei einer sequentiellen Betätigung des Betätigungselements kann die Reihenfolge der Betätigungsrichtungen frei gewählt werden.

Vorzugsweise verläuft das Verfahren gemäss des zweiten Aspekts sequentiell und in nachfolgend beschriebenen Schritten: Durch die Betätigung des Betätigungselements in die zweite Betätigungsrichtung wird eine Zeitspanne vorgegeben und der Zeitgeber aktiviert sowie ein zweiter Teil des Energiespeichers geladen. Durch die Betätigung des Betätigungselements in die erste Betätigungsrichtung wird ein Extraktionsgut-Behälter in den Innenraum des Lösemittelbehälters abgesenkt sowie ein erster Teil eines Energiespeichers geladen. Das Betätigungselement bewegt sich mittels einer Entladung des zweiten Teils des Energiespeichers während der vorgegebenen Zeitspanne entgegen der zweiten Betätigungsrichtung. Das Betätigungselement bewegt sich mittels einer Entladung des ersten Teils des Energiespeichers nach Ablauf der vorgegebenen Zeitspanne entgegen der ersten Betätigungsrichtung und hebt den Lösemittelbehälter aus dem abgesenkten Zustand an.

Während der erste und der zweite Aspekt grundsätzlich zwei eigenständige Wege zur Lösung der erfindungsgemässen Aufgabe aufzeigen, wird dem Fachmann unmittelbar klar, dass verschiedene Elemente mit Vorteil zwischen den beiden Aspekten ausgetauscht werden können, sofern sie sich konstruktiv nicht entgegenstehen. Insbesondere kann beispielsweise der Zylindermantel des zweiten Aspekts die Hülse des ersten Aspekts ersetzen. Ebenso kann eine Halterung des Extraktionsgut-Behälters an der Hebevorrichtung oder die Ausbildung des Extraktionsgutbehälters zwischen den Ausführungsformen der beiden Aspekte ohne wesentliche Abwandlungen ausgetauscht werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: Eine Seitenansicht einer Vorrichtung gemäss des ersten Aspekts der Erfindung mit einem Aufsatz auf einem Lösemittelbehälter, wobei der Extraktionsgutbehälter in abgesenktem Zustand vorliegt;
- Fig. 2: eine Explosionsdarstellung eines Aufsatzes gemäss des ersten Aspekts der Erfindung;
- Fig. 3: eine Schrägansicht einer Hülse gemäss des ersten Aspekts der Erfindung;
- Fig. 4: eine Schrägansicht einer Grundplatte gemäss des ersten Aspekts der Erfindung;
- Fig. 5: eine Schrägansicht eines Aufsatzes gemäss des ersten Aspekts der Erfindung in angehobenem Zustand, ohne Kalotte und Extraktionsgutbehälter, wobei vom Zeitgeber lediglich das Auslöseelement dargestellt ist;
- Fig. 6: eine Schrägansicht eines Aufsatzes gemäss des ersten Aspekts der Erfindung in abgesenktem Zustand, ohne Kalotte und Extraktionsgutbehälter, wobei vom Zeitgeber lediglich das Auslöseelement dargestellt ist;
- Fig. 7: eine Schrägansicht eines Aufsatzes gemäss des ersten Aspekts der Erfindung in angehobenem Zustand, ohne Kalotte und Hülse, wobei vom Zeitgeber lediglich das Auslöseelement dargestellt ist;
- Fig. 8: eine Schrägansicht eines Aufsatzes gemäss des ersten Aspekts der Erfindung in abgesenktem Zustand, ohne Kalotte und Hülse, wobei vom Zeitgeber lediglich das Auslöseelement dargestellt ist;
- Fig. 9: eine Schnittdarstellung eines Aufsatzes gemäss des ersten Aspekts der Erfindung entlang einer horizontalen Ebene durch die Längsachse der Hülse und in der Symmetrieebene des Lösemittelbehälters.
- Fig. 10a: Eine Seitenansicht eines Aufsatzes zur zeitgesteuerten Zubereitung eines Extraktionsgetränks gemäss des zweiten Aspekts der Erfindung auf einem Lösemittelbehälter mit aktiviertem Zeitgeber;
- Fig. 10b: eine der Fig. 10a gegenüberliegende Seitenansicht des Aufsatzes des zweiten Aspekts der Erfindung auf einem Lösemittelbehälter mit nicht aktiviertem Zeitgeber;
- Fig. 11a: eine schematische Darstellung einer Querschnittsebene des Aufsatzes gemäss des zweiten Aspekts der Erfindung mit aktiviertem Zeitgeber, welche durch die Symmetrieebene des Lösemittelbehälters verläuft;
- Fig. 11b: eine schematische Darstellung einer Querschnittsebene des Aufsatzes gemäss des zweiten Aspekts der Erfindung auf einem Lösemittelbehälter mit nicht aktiviertem Zeitgeber, welche durch die Symmetrieebene des Lösemittelbehälters verläuft;
- Fig. 12: eine schematische Darstellung einer Schrägansicht des doppelwandigen Mantels, des weiteren Betätigungselements, der Kulisse, der Glocke und der Torsionsfeder im Zusammenbau gemäss des zweiten Aspekts der Erfindung bei aktiviertem Zeitgeber;
- Fig. 13: eine schematische Darstellung einer der Fig. 12 gegenüber liegenden Schrägansicht des zweiten Aspekts der Erfindung bei aktiviertem Zeitgeber, wobei zusätzlich das erste, zweite und das gehemmte Zahnrad ersichtlich sind;
- Fig. 14: eine schematische Darstellung einer Schrägansicht des Zusammenwirkens des doppelwandigen Mantels und der Kulisse gemäss des zweiten Aspekts der Erfindung.

Grundsätzlich sind in den Figuren gleiche Teile mit gleichen Bezugszeichen versehen.

### Wege zur Ausführung der Erfindung

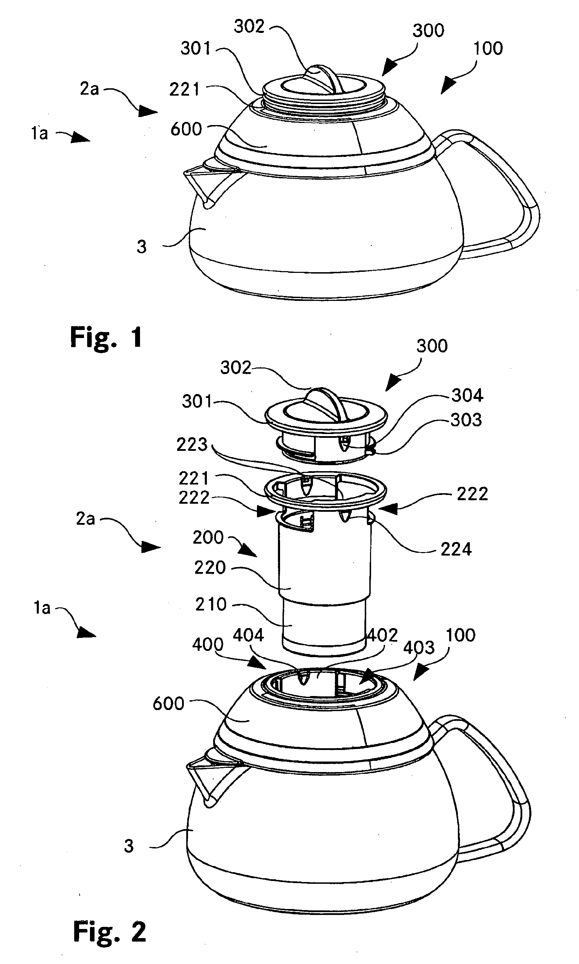

In den nachfolgenden Absätzen wird anhand der Figuren 1 bis 9 eine erste Ausführungsform gemäss eines ersten Aspekts der Erfindung beschrieben.

Die Figur 1 zeigt eine Seitenansicht einer ersten Ausführungsform einer erfindungsgemässen Vorrichtung 1a mit einem Aufsatz 2a auf einem Lösemittelbehälter 3, wobei der Extraktionsgutbehälter 200 in abgesenktem Zustand vorliegt. Der Aufsatz 2a ist lösbar, insbesondere formschlüssig mit dem Lösemittelbehälter 3 verbunden. In gewissen Ausführungsformen ist auch eine gelenkige Verbindung des Aufsatzes 2a mit dem Lösemittelbehälter 3 vorgesehen, die mitunter auch lösbar sein kann.

Der Aufsatz 2a umfasst als wesentliche Bestandteile einen Grundkörper 100, welcher auf dem Lösemittelbehälter 3 aufgesetzt ist, sowie einen Extraktionsgutbehälter 200, wobei von demselben in der Figur 1 lediglich ein Flansch 221 ersichtlich ist, welcher auf dem Grundkörper aufliegt. Weiter umfasst der Aufsatz 2a einen Zeitgeber 300, welcher auf dem Extraktionsgutbehälter 200 als Deckel aufgesetzt ist und mit einem Flansch 301 auf dem Flansch 221 des Extraktionsgutbehälters 200 aufliegt. Der Zeitgeber 300 umfasst des Weiteren ein Drehschalter 302 zum Einstellen einer Zeitdauer.

Die Figur 2 zeigt in einer Explosionsdarstellung eine seitliche Ansicht der Vorrichtung 1a gemäss der Figur 1. Im Wesentlichen zeigt diese Darstellung die Bestandteile, welche bei einer Verwendung der Vorrichtung bedient werden. Vorerst wird der Extraktionsgutbehälter 200 mit Extraktionsgut, zum Beispiel Tee, befüllt und anschliessend in den Grundkörper 100 eingeführt. Der Extraktionsgutbehälter 200 wird mit dem Zeitgeber 300 verschlossen. Anschliessend wird mittels einer Drehung des Drehschalters 302 des Zeitgebers 300 eine Zeitspanne vorgegeben. Schliesslich wird über den Drehschalter 302 der Extraktionsgutbehälter 200 in den Innenraum des Lösemittelbehälters 3 geführt. Nach Ablauf der Zeitspanne springt der Extraktionsgutbehälter 200 zurück, so dass dieser nicht mehr, oder nur noch teilweise in den Innenraum des Lösemittelbehälters 3 ragt.

Weiter ist in der Figur 2 ersichtlich, dass der Zeitgeber 300 im Wesentlichen eine zylindrische Grundform aufweist. Der Drehschalter 302 ist koaxial zu dieser Grundform rotierbar gelagert. Weiter umfasst der Zeitgeber 300 ein Auslöseelement 303, welches als zwei bezüglich der Achse gegenüberliegende Stifte ausgebildet ist. Das Auslöseelement 303 ist bezüglich des Drehschalters 302 axial nach unten versetzt angeordnet und auch koaxial rotierbar gelagert. Das Auslöseelement 303 ragt über den Durchmesser des Gehäuses des Zeitgebers 300 hinaus, nicht aber über den Flansch 301 desselben und beschreibt während der Zeitspanne einen Teilkreisbogen. Das Auslöseelement 303 ist direkt mit der Bewegung des Drehschalters 302 gekoppelt, das heisst, bei einer Einstellung der Zeitspanne mit dem Drehschalter 302 wird das Auslöseelement 303 um denselben Winkel um dessen Rotationsachse verschwenkt.

Unterhalb des Flansches 301 des Zeitgebers 300 ist zudem eine Nase 304 ersichtlich, welche sich axial bis an den Flansch 301 erstreckt. Eine zweite solche Nase 304 befindet sich auf der Rückseite des Zeitgebers 300 (nicht ersichtlich).

Der Extraktionsgutbehälter 200 ist in der vorliegenden Ausführungsform zweiteilig ausgebildet und umfasst ein Siebteil 210 und ein Halteteil 220. Das Siebteil 210 weist im Wesentlichen die Form eines einseitig geschlossenen Hohlzylinders mit runder Grundfläche auf. Am Boden des Siebteils 210 befinden sich Löcher, welche ein Durchströmen von Lösemitteln erlauben (nicht dargestellt). Das Halteteil 220 ist im Wesentlichen als zweiseitig offener Hohlzylinder mir runder Grundfläche ausgebildet und weist einen Innendurchmesser auf, welcher dem Aussendurchmesser des Siebteils 210 entspricht. Das Siebteil 210 kann so teleskopartig in den Halteteil 220 eingeführt werden und in verschiedenen axialen Positionen mittels Rastnasen und entsprechenden Auskerbungen, welche auch umlaufend ausgebildet sein können, verrastet werden (nicht dargestellt). Damit kann die Eintauchtiefe des Extraktionsgutbehälters 200 im Lösemittelbehälter 3 der Füllhöhe des Lösemittels angepasst werden.

Das Halteteil 220 weist in einem oberen Bereich der Innenwandung zwei gegenüberliegende Kerben 223 auf, in welche, bei aufgesetztem Zeitgeber 300, die Nasen 304 eingreifen können und so den Zeitgeber 300 gegenüber dem Halteteil 220 verdrehsichern. Das Halteteil 220 weist weiter in einem oberen Bereich einen Flansch 221 auf, welcher radial nach aussen ragt. Im oberen Bereich weist das Halteteil 220 des Weiteren zwei gegenüberliegende Durchbrüche entlang eines Teilkreises von ungefähr 90° auf, welche eine L-förmige Querschnittsfläche aufweisen. Aus der Figur 2 ist ersichtlich, dass der Durchbruch 222 nur einen inneren Teil des Flansches 221 erfasst. In diesem Bereich entspricht der Durchmesser des Halteteils 220 einem Durchmesser des Auslöseelements 303 des Zeitgebers 300, respektive dem maximalen Abstand der beiden Stifte des Auslöseelements 303. Der Zeitgeber 300 kann so auf das Halteteil 220 aufgesetzt werden, dass das Auslöseelement 303 bei beliebig eingestellter Zeitspanne durch die entsprechenden Durchbrüche 222 geführt werden kann, vorausgesetzt der Zeitgeber 300 wird so aufgesetzt, dass die Nasen 304 desselben in die Kerben 223 des Halteteils 220 geführt werden. Für den Verwender stellt dies keine besondere Herausforderung dar, da er in einem Bereich von ca. +/- 45° den Zeitgeber hin und her drehen kann, bis er im Halteteil 220 einrastet. An der Aussenwandung, unterhalb des Flansches 221 und den Kerben gegenüberliegend, weist das Halteteil zwei Nasen 224 auf.

Schliesslich ist in der Figur 2 noch ansatzweise die Hülse 400 ersichtlich, welche in der vorliegenden Darstellung mittels einer hier nicht ersichtlichen Verriegelungsvorrichtung im Grundkörper 100 gehalten ist.

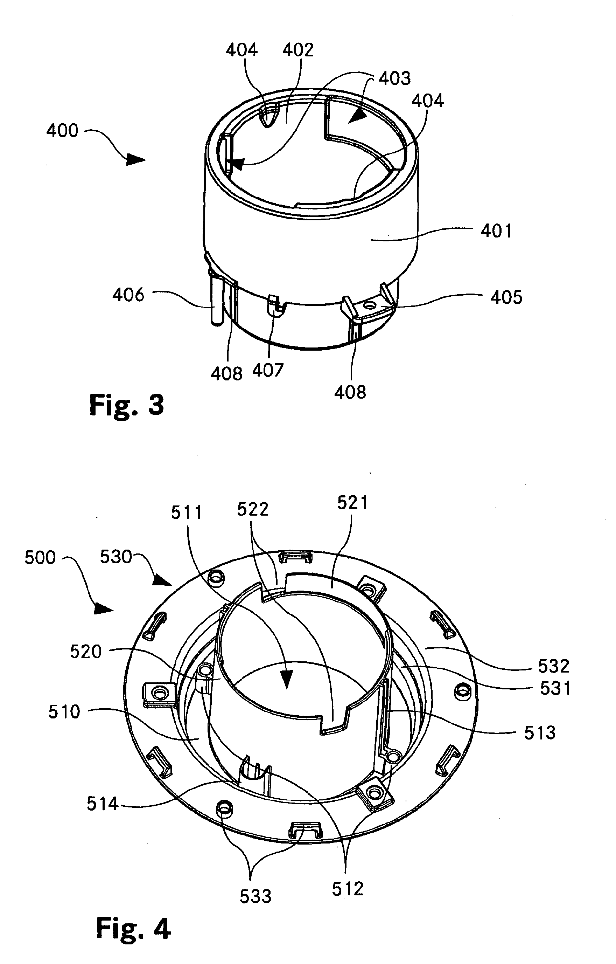

Die Figur 3 zeigt die im Wesentlichen als zweiseitig offener Kreiszylinder ausgebildete Hülse 400, umfassen eine äussere Wandung 401 und eine innere Wandung 402, welche einen Zwischenraum definieren und in einem oberen Randbereich verbunden sind. Die innere Wandung 402 ragt nach unten über die äussere Wandung 401 hinaus. Des Weiteren weist die Hülse 400 innwändig der inneren Wandung 402 an den oberen Rand angrenzend zwei gegenüberliegende Kerben 404 auf, in welche die Nasen 224 des Halteteils 220 des Extraktionsgutbehälters 200 eingreifen und diesen so verdrehgesichert halten können. Wird nun der Extraktionsgutbehälter 200 in die Hülse 400 eingesetzt, so kommunizieren die Durchbrüche 403 der Hülse mit den Durchbrüchen 222 des Halteteils 220 und der Flansch 221 des Halteteils 220 kommt auf dem oberen Rand der Hülse 400 zu liegen. Wie der Extraktionsbehälter 200 weist auch die Hülse Durchbrüche 403 auf, welche einen L-förmigen Querschnitt aufweisen. Auch hier wird der obere Rand nicht vollständig durchbrochen. Bei aufgesetztem Zeitgeber 300 ragt das Auslöseelement 303 durch die Durchbrüche 222 und 403 hindurch, insbesondere radial über die innere Wandung 402 hinaus, nicht aber bis zu äussere Wandung 401. Die radial äusseren Enden des Auslöseelements 303 laufen also während der Zeitspanne im Zwischenraum zwischen der inneren Wandung 402 und der äusseren Wandung 401 der Hülse 400.

In einem unteren Bereich der äusseren Wandung 401 der Hülse 400 sind bezüglich der Hülse 400 gegenüberliegend zwei Gleiter 405 angeformt. Die Gleiter 405 sind als radial nach aussen stehende Elemente ausgebildet, welche eine axiale Öffnung aufweisen. Im Bereich der Gleiter 405, an der Innenseite der äusseren Wandung 401 ist jeweils eine axial orientierte Führungsleiste angeformt (nicht ersichtlich). Der Zweck und die Funktionsweise sind weiter unten detailliert erklärt. Auch die Aussenseite der inneren Wandung 402 ist mit vier regelmässig verteilt angeordneten, axial orientierten Führungsschienen 408 versehen.

Weiter sind an die Hülse 400 im unteren Randbereich der äusseren Wandung 401 zwei bezüglich der äusseren Wandung 401 radial nach aussen versetzte und axial nach unten ragende Stifte 406 angeformt. Diese sind bezüglich der Gleiter 405 um 90° versetzt, in ungefähr derselben Ebene, rechtwinklig zur Längsachse der Hülse 400 angeordnet.

Schliesslich sind an der Hülse 400 im unteren Randbereich der äusseren Wandung 401 zwei bezüglich der äusseren Wandung 401 radial nach aussen ragende Rasthaken 407 angeformt, welche im Wesentlichen tangential zur Hülse 400 orientiert sind. Von oben betrachtet befinden sich die Rasthaken 407 unterhalb der Durchbrüche 403, insbesondere bezüglich des Uhrzeigersinns in einem ersten, respektive Anfangsbereich der jeweiligen Durchbrüche 403.

Die Figur 4 zeigt eine Grundplatte 500, welche eine kreisringförmige Platte 510 mit einem Durchbruch 511, eine mit dem Durchbruch 511 kommunizierende, axial angeordnete, nach oben ragende Führungshülse 520 und einen im Querschnitt L-förmigen um den äusseren Rand der Platte 510 umlaufenden Flansch 530 umfasst. Die Führungshülse 520 ist im Wesentlichen als Rohrstutzen ausgebildet und ist so dimensioniert, dass die Hülse 400 so auf die Führungshülse 520 aufgesetzt werden kann, dass diese zwischen der äusseren Wandung 401 und der inneren Wandung 402 zu liegen kommt. In einem oberen Bereich weist die Führungshülse 520 innwändig zwei sich gegenüberliegende, um ungefähre 90° laufende Ausnehmungen 521, respektive eine Materialverjüngung auf, welche von oben betrachtet jeweils im Uhrzeigersinn mit einer Durchbrechung 522 beginnen. Die Ausnehmungen 521, respektive die Materialverjüngungen ragen bis zum oberen Rand der Führungshülse 520 und weisen die Form eines entlang des Umfangs der Führungshülse 520 längliche Form auf, die Durchbrechungen 522 weisen ungefähr eine quadratische Form auf.

Auf der Platte 510 der Grundplatte 500 sind zwei, bezüglich der Führungshülse 520 gegenüberliegende und axial orientierte Haltehülsen 512 für Führungsstangen 513 (in Figur 4 nicht dargestellt) angeordnet. Zwischen den Haltehülsen 512 und der Aussenwand der Führungshülse 520 ist mit letzterer jeweils eine axial orientierte Schienenführung 513 über die gesamte Höhe angeordnet. Bei aufgesetzter Hülse 400 läuft die Führungsleiste, welche axial an der Innenseite der äusseren Wandung 401 angeformt ist, in der besagten Schienenführung 513 womit die Hülse 400 gegenüber der Führungshülse 520 verdrehgesichtert verfahrbar ist. Zwei Federführungen 514 sind bezüglich der Haltehülsen um 90° versetzt auf der Platte 510 angeordnet und weisen jeweils eine axial orientierte Öffnung auf.

Die Führungsschienen 408 an der Aussenseite der inneren Wandung 402 der Hülse 400 dienen zur reibungsarmen Führung der Hülse 400 an der Führungshülse 520, da damit die Kontaktfläche verringert wird. Damit wird die Führung insgesamt robuster, insbesondere gegenüber Verschmutzungen.

Eine erste Flanke 531 des Flansches 530 ist axial nach oben ragend mit der Platte 510 verbunden und eine zweite Flanke 532 ragt am oberen Ende der ersten Flanke 531 radial nach aussen. Eine untere Seite der zweiten Flanke 532 bildet die Auflagefläche für die Auflage auf einem Lösemittelbehälter 3. Die obere Seite der zweiten Flanke 532 ist mit mehreren Halteelementen 533 für die Montage der kalottenförmigen Abdeckschale 600 (siehe Figur 1, 2 oder 9) versehen. Um die Figuren lesbarer zu gestalten, sind jeweils nur zwei der Halteelemente 533 mit Bezugszeichen versehen.

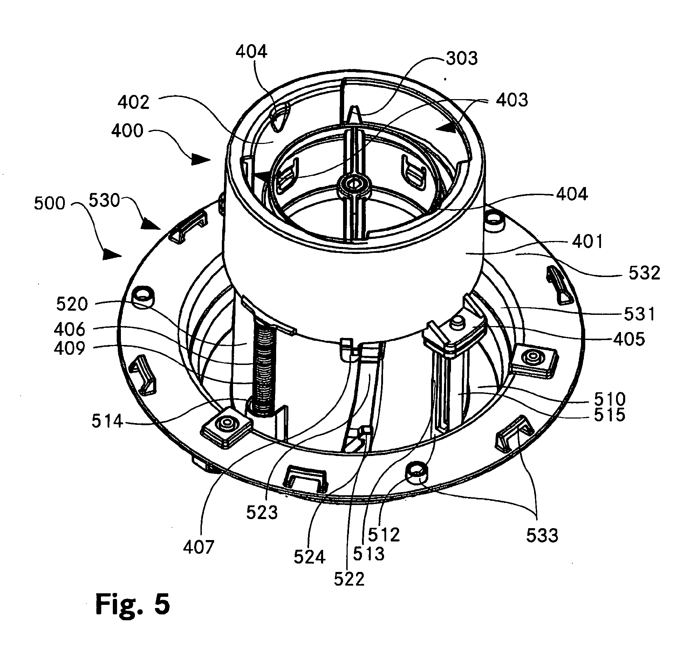

Die Figur 5 zeigt die Grundplatte 500 gemäss Figur 4 mit aufgesetzter Hülse 400 gemäss Figur 3. Zusätzlich ist in der Hülse 400 lediglich das Auslöseelement 303 des Zeitgebers 300 dargestellt, um die Funktionsweise der Vorrichtung besser verständlich darstellen zu können. Zur besseren Übersicht ist auch der Extraktionsgutbehälter 200 nicht dargestellt. Zusätzlich zu den vorangegangenen Figuren 1 bis 4 zeigt die vorliegende Darstellung eine im Wesentlichen entspannte Spiraldruckfeder 409, welche um den Stift 406 der Hülse 400 angeordnet ist. Ein unteres Ende der Feder ragt in die Federführung 514 hinein und wird so durch die Federführung 514 und den Stift 406 geführt. Dieselbe Anordnung findet sich auch auf der Rückseite. Weiter ist eine axial orientierte und nach oben ragende Stange 515 ersichtlich, welche in der Haltehülse 512 fest montiert ist. Die Hülse 400 wird über den Gleiter 405 und die Stange 515 linear geführt. Auch diese Anordnung findet sich ein zweites Mal auf der Rückseite.

Weiter ist ein als Hebelarm ausgebildetes Betätigungselement 523 verbunden mit einem Rasthaken 524 ersichtlich, welches um eine radiale Achse an der Führungshülse 520 verschwenkbar angeordnet ist. Der Rasthaken 524 ist im Wesentlichen horizontal über, jedoch nahe an der Achse angeordnet und ist zum Betätigungselement 523 radial nach aussen beabstandet. Das Betätigungselement 523 und der Rasthaken werden mittels einer nicht dargestellten Schenkelfeder mit einer Rückstellkraft beaufschlagt und in einer im Wesentlichen axialen Position gehalten. Das Betätigungselement 523 ragt mit einem oberen Ende vor die Durchbrechung 522 und weist zusätzlich eine Nase auf, welche durch die Durchbrechung 522 hindurch ragt. Die Nase dient als Kontaktelement, über welches das Auslöseelement 303 das Betätigungselement 523 betätigen kann.

Das Auslöseelement 303 ist koaxial mit der Hülse 400 angeordnet und umfasst im Wesentlichen einen mit einem mittig rotierbar gelagerten Balken verbundenen koaxialen Kreisring, wobei der Balken zweiseitig über den Kreisring übersteht und so Kontaktelemente für die Nasen der Betätigungselemente 523 bildet.

Die Hülse 400 ist in der Figur 5 nicht verriegelt, sonder angehoben. Die Zeitspanne ist nicht eingestellt, respektive bereits abgelaufen. In der vorliegenden Darstellung ist ersichtlich, dass die Schenkelfeder gespannt ist und im nächsten Augenblick das Betätigungselement 523 zusammen mit dem Rasthaken 524 in die axiale Position zurückspringen wird.

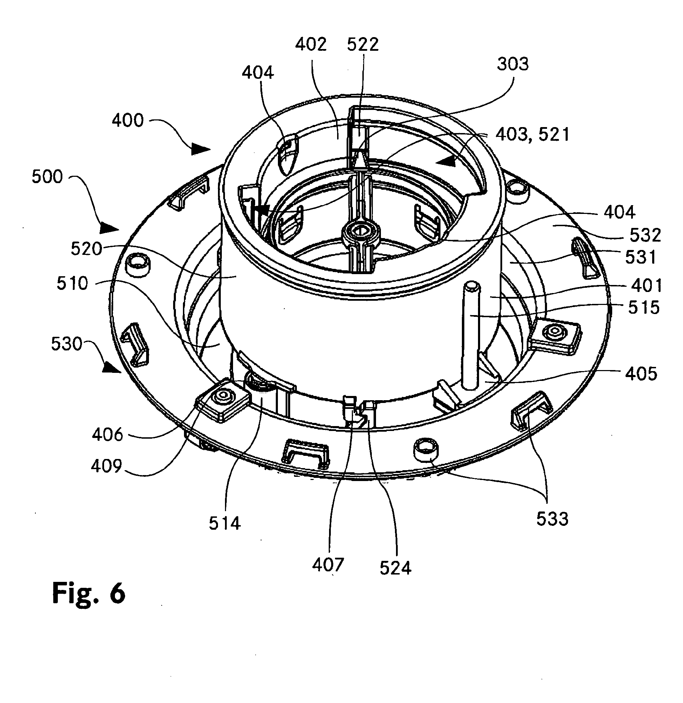

Um die Vorrichtung zu aktivieren wird nun mit dem Zeitgeber 300 eine Zeitspanne eingestellt, wodurch das Auslöseelement 303 je nach Zeitspanne mehr oder weniger von oben gesehen im Uhrzeigersinn gedreht wird. Anschliessend wird die Hülse 400 nach unten gepresst, womit die Spiraldruckfeder 409 gespannt wird und der Rasthaken 524 des Betätigungselements 523 über den Rasthaken 407 der Hülse 400 eingreift und damit ein Zurückschnellen derselben vorerst verhindert. Während der Zeitspanne dreht sich nun das Auslöseelement 303 entgegen dem Uhrzeigersinn zurück, bis die äusseren Enden des Auslöseelements 303 die Nase des Betätigungselements kontaktieren. Diesen Zustand zeigt die Figur 6.

Die Figur 6 zeigt dieselben Bauteile, welche bereits in der Figur 5 dargestellt sind. Im Unterschied zur Figur 5 ist die Hülse 400 in abgesenktem Zustand über den Rasthaken 407 der Hülse und den Rasthaken 524 der Führungshülse 520 verriegelt. Das Betätigungselement 523 ist durch die Schenkelfeder in einer axialen Orientierung gehalten und die Spiraldruckfeder 409 ist gespannt. Das Auslöseelement 303 ist bereits in einer abgelaufenen Zeitspanne entsprechenden Position und wird im nächsten Augenblick das Betätigungselement 523 so betätigen, dass sich dasselbe von oben gesehen gegen den Uhrzeigersinn verschwenkt und den Rasthaken 524 von demjenigen der Hülse löst. Dies hat zur Folge, dass die Hülse durch die Rückstellkraft der Spiraldruckfeder 409 nach oben gefahren wird, womit wiederum der Zustand gemäss Figur 5 erreicht wird.

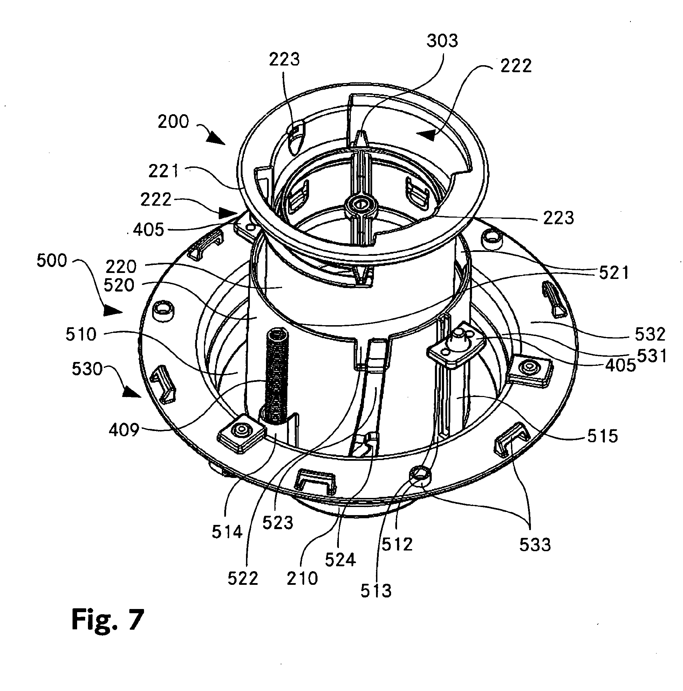

Die Figur 7 zeigt im Wesentlichen dasselbe wie die Figur 5, wobei die Hülse 400 nicht dargestellt ist. Anhand des Auslöseelements 303 ist ersichtlich, dass in dieser Darstellung eine maximale Zeitspanne eingestellt, der Extraktionsgutbehälter 200 aber (noch) nicht nach unten geführt ist. Das Auslöseelement 303 ist nämlich im Uhrzeigersinn bis an den Anschlag des Durchbruchs 222 des Extraktionsgutbehälters 200 gedreht.

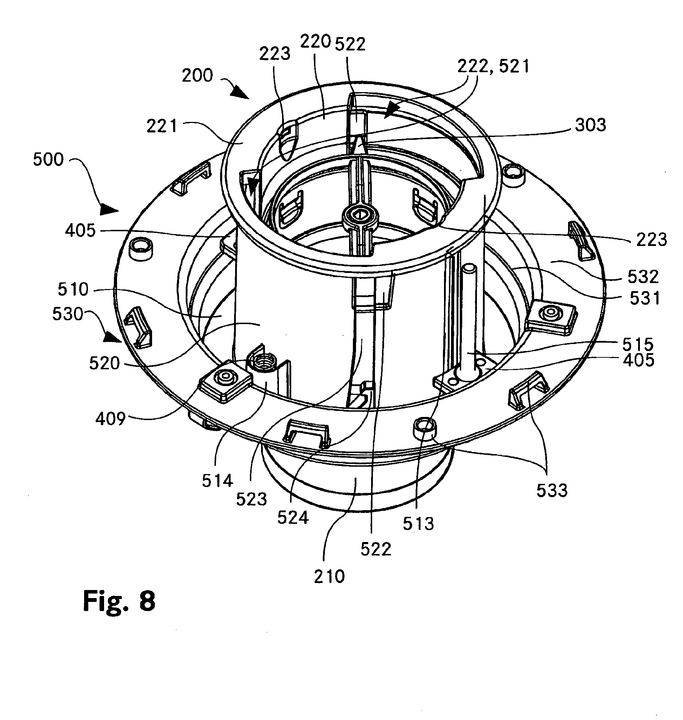

Die Figur 8 entspricht wiederum im Wesentlichen der Figur 6, wobei die Hülse 400 nicht dargestellt ist. Im dargestellten Zustand ist die Zeitspanne abgelaufen. Das Auslöseelement 303 kontaktiert bereits das Betätigungselement 523, hat jedoch die Verriegelungsvorrichtung noch nicht entriegelt, da das Betätigungselement 523 noch senkrecht orientiert ist.

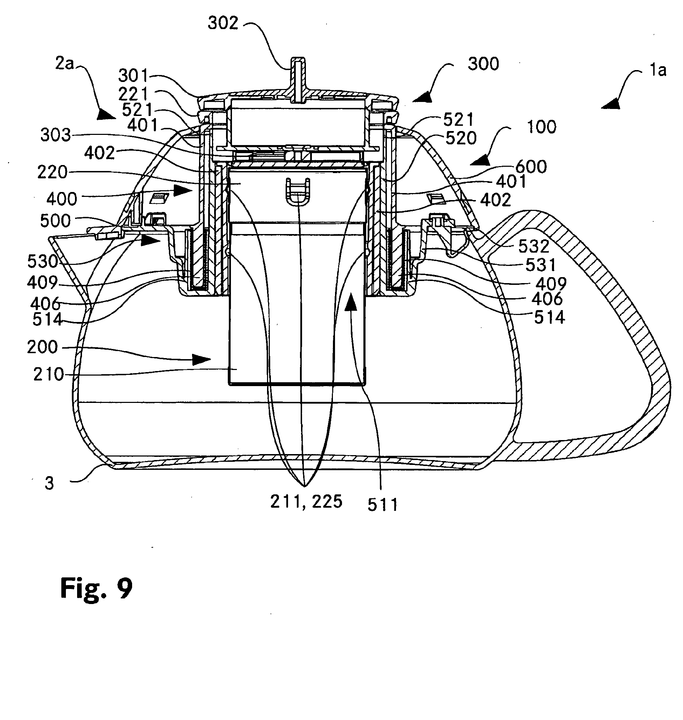

Die Figur 9 zeigt einen vertikalen Schnitt entlang einer Längsachse durch die Vorrichtung 1a gemäss Figur 1. Der Extraktionsgutbehälter 200 ist in der Brühstellung, das heisst, nach unten in den Innenraum des Lösemittelbehälters 3 gefahren.

In dieser Darstellung ist der teleskopartige Aufbau des Extraktionsgutbehälters 200 gut ersichtlich. Das Siebteil 210 weist umfangseitig, in dieser Ausführungsform in zwei Höhen, federnde Noppen 211 auf, welche radial nach aussen ragen. An entsprechenden Stellen weist das Halteteil 220 Vertiefungen 225 auf, in welche die Noppen 211 einrasten können. Das Siebteil 210 kann also nach unten aus dem Halteteil gezogen werden, bis die oberen Noppen 211 in die unteren Vertiefungen 225 einrasten.

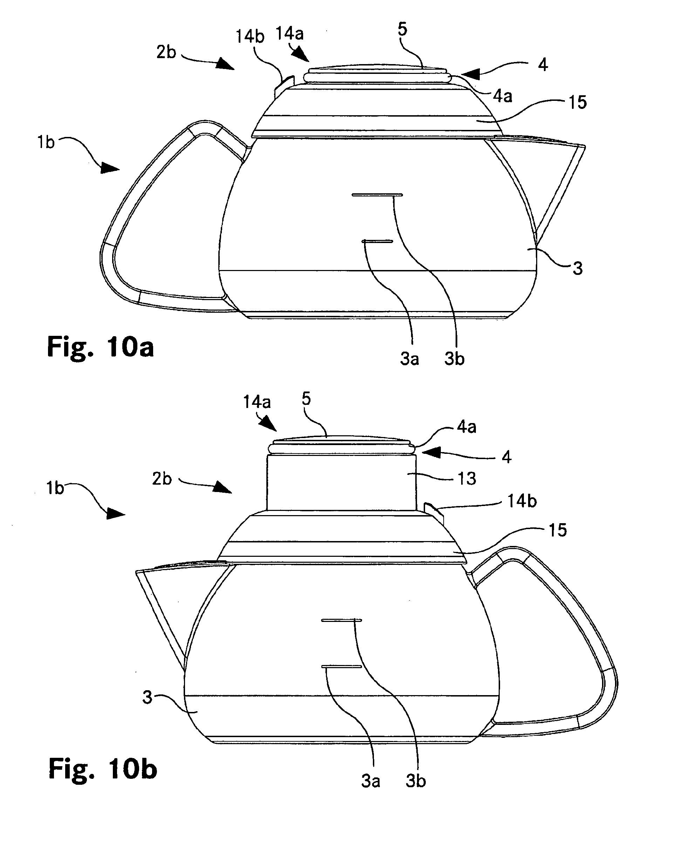

In den nachfolgenden Absätzen wird anhand der Figuren 10 bis 14 eine zweite Ausführungsform gemäss eines zweiten Aspekts der Erfindung beschrieben.

Die Figur 10a zeigt eine Seitenansicht der Vorrichtung 1b gemäss eines zweiten Aspekts der Erfindung mit aktiviertem Zeitgeber. Weiter ist ein Lösemittelbehälter 3 und ein passender Aufsatz 2b in einer zweiten Ausführungsform ersichtlich. Der Aufsatz 2b ist lösbar, insbesondere formschlüssig mit dem Lösemittelbehälter 3 verbunden. In gewissen Ausführungsformen ist auch eine gelenkige Verbindung des Aufsatzes 2b mit dem Lösemittelbehälter 3 vorgesehen, die mitunter auch lösbar sein kann.

Der Lösemittelbehälter 3 in der vorliegenden Ausführungsform besteht aus Glas oder aus Kunststoff, hat ein Fassungsvermögen von beispielsweise ungefähr zwei Liter und weist zwei Markierungen 3a und 3b auf, wobei eine tiefere Markierung 3a bei 0.7L und eine höhere Markierung 3b bei 1.2L liegt. Er kann aber durchaus andere Formen und Fassungsvermögen aufweisen oder aus anderen Materialien gebildet sein.

In der Figur 10b, welche wiederum eine Seitenansicht der Vorrichtung 1 b gemäss eines zweiten Aspekts, aber von der gegenüberliegenden Seite und mit nicht aktiviertem Zeitgeber zeigt, ist im oberen Bereich des Aufsatzes 2b eine Auskargung eines auskargenden Zylindermantels 4b des Extraktionsgut-Behälters 4 sowie ein Deckel 5 ersichtlich. Schliesslich ist ein zweites Betätigungselement 14b und ein doppelwandiger Mantel 13 zu sehen, auf welche später näher eingegangen wird. Das Betätigungselement 14a setzt sich dabei aus dem Deckel 5, dem auskargenden Zylindermantel 4b und dem doppelwandigen Mantel 13 zusammen.

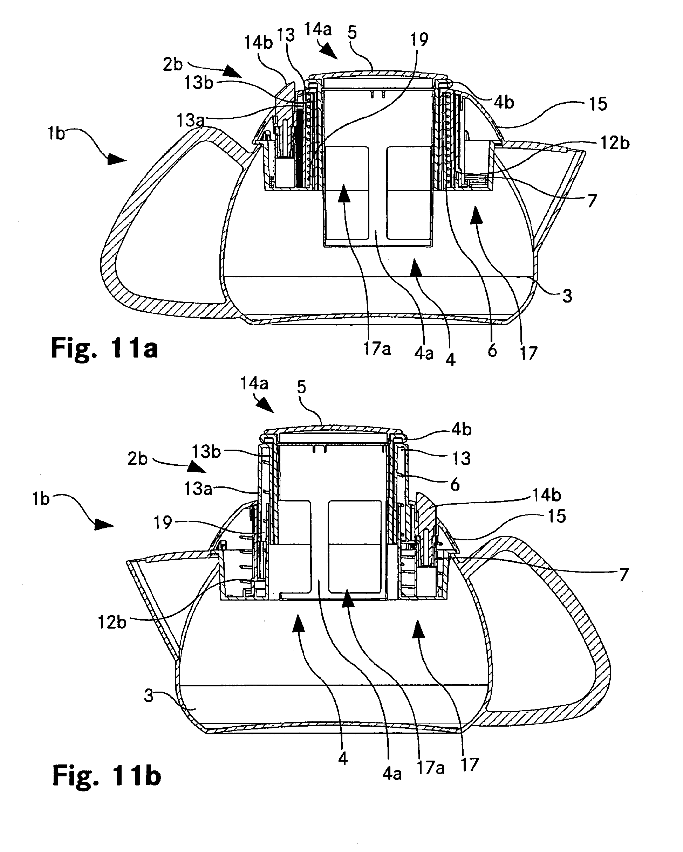

In der Figur 11a ist ein Schnitt entlang einer Symmetrieachse des Lösemittelbehälters 3 durch die Vorrichtung 1 b, gemäss eines zweiten Aspekts, bei aktiviertem Zeitgeber dargestellt.

Der doppelwandige Mantel 13 ist einseitig geschlossen und nimmt zwischen den beiden Wänden 13a, 13b eine Schraubenfeder 6, ausgebildet aus Federstahl, auf, welche in entspanntem Zustand auf der offenen Seite des doppelwandigen Mantels 13 austritt (siehe dazu Figur 11 b) und bei gespanntem Zustand durch denselben vollständig aufgenommen werden kann.

Ein Bodenbereich 17 umfasst einen einwandigen Zylindermantel 19, welcher eine Öffnung 17a im Bodenbereich 17 umschliesst, welche im Wesentlichen der Querschnittsfläche des Extraktionsgut-Behälters 4 entspricht. Der einwandige Zylindermantel 19 weist einen Innendurchmesser im Bereich des Aussendurchmessers des Innenmantels 13b des doppelwandigen Mantels 13 auf, so dass der doppelwandige Mantel 13 über den einwandigen Zylindermantel 19 überstülpbar ist. Die Schraubenfeder 6 weist einen Aussendurchmesser im Bereich des Innendurchmessers des Aussenmantels 13a auf, so dass der doppelwandige Mantel 13 auch über die Schraubenfeder 6 überstülpbar ist. Ein Innendurchmesser der Schraubenfeder 6 liegt im Bereich des Aussendurchmessers des einwandigen Mantels 19. Weiter sind die beiden Mäntel 13a, 13b des doppelwandigen Mantels 13 so beabstandet, dass der doppelwandige Mantel 13 gleichzeitig über den einwandigen Zylindermantel 19 und die Schraubenfeder 6 überstülpbar ist. In dieser Anordnung ist es nun möglich, die Schraubenfeder 6 zu spannen, indem der doppelwandige Mantel 13 gegen den Bodenbereich 17 gepresst wird. In der Figur 11a ist die Schraubenfeder 6 in bezüglich der Vorrichtung 1b vollständig zusammengepresstem und in der Figur 11b in entspanntem Zustand ersichtlich. Alternativ kann die Anordnung des einwandigen Zylindermantels 19 und der Schraubenfeder 6 auch vertauscht sein, so dass die Schraubenfeder 6 an eine Innenwand des einwandigen Zylindermantels 19 anliegt.

Der Extraktionsgut-Behälter 4 ist im Wesentlichen zylindrisch und einseitig offen aufgebaut und weist eine Querschnittsfläche im Grössenbereich der Öffnung 17a des Bodenbereichs 17 auf. Die Auskargung des auskargenden Zylindermantels 4b steht dabei im Bereich der Öffnung des Extraktionsgut-Behälters 4 über und lässt sich mit einem Deckel 5 mittels eines Form- und/oder Kraftschlusses schliessen. Der Extraktionsgut-Behälter 4 weist am Boden und/oder am Mantel im Bereich des Bodens eine Vielzahl von Öffnungen auf, welche in den Figuren 11a und 11b grossflächig ausgebildet, geeignet für eine Aufnahme von Filtereinsätzen sind. Diese können aber auch anderweitig, insbesondere kleiner, oder nur im Bodenbereich des Extraktionsgut-Behälters 4 angeordnet sein. Der Aussendurchmesser des Extraktionsgut-Behälters 4 liegt im Bereich des Innendurchmessers des doppelwandigen Mantels 13, so dass der Extraktionsgut-Behälter 4 mühelos in den doppelwandigen Mantel 13 bis zur Auskargung des auskargenden Zylindermantels 4b eingeführt werden kann, womit das Zusammenpressen, respektive Spannen der Schraubenfeder 6 auch über den Deckel 5, respektive über den Extraktionsgut-Behälter 4 erfolgen kann. Dadurch wird der erste Teil des Energiespeichers, welcher nach Ablauf der Zeitspanne den Extraktionsgut-Behälter 4 anheben wird, geladen.

Der Extraktionsgut-Behälter 4 ist in der vorliegenden Ausführungsform zweiteilig ausgebildet und umfasst ein zylindrisches Gefäss 4a und ein auskargender Zylindermantel 4b. Der Extraktionsgut-Behälter 4 kann aber auch einteilig ausgebildet sein. Das zylindrische Gefäss 4a weist in den Figuren 11a und 11b mehrere Öffnungen auf und ist für eine Aufnahme eines Siebes oder Filters ausgebildet, wobei ein Sieb oder Filter auch direkt im zylindrischen Gefäss 4a integriert sein kann. Der auskargende Zylindermantel 4b weist an der Innenwand zwei umlaufende rillenförmige Aufnahmen auf und das zylindrische Gefäss 4a weist entsprechende radial nach aussen abstehende federnde Teile auf, welche bei einer axialen Verschiebung des zylindrischen Gefässes 4a im auskargenden Zylindermantel 4b in die rillenförmigen Aufnahmen einrasten. Die federnden Elemente und die rillenförmigen Aufnahmen sind so aufeinander abgestimmt, dass durch eine axial angesetzte Kraft die eingerasteten federnden Elemente mühelos aus der Rastung gehoben werden können, um allfällig in der anderen rillenförmigen Aufnahme wieder einzurasten.

In den Figuren 11a und 11b ist weiter eine Torsionsfeder 7, wiederum aus Federstahl ersichtlich. Die hier verwendete Torsionsfeder 7 weist die Form einer Schraubenfeder auf. Sie hat in axialer Richtung eine vernachlässigbar kleine Federkonstante, nicht aber in tangentialer Richtung. In den Figuren 11a und 11b ist damit nicht ersichtlich, ob sie gespannt ist oder nicht. Die Torsionsfeder 7 ist mit einem ersten Ende mit dem Bodenbereich 17 und mit einem gegenüberliegenden Ende mit dem doppelwandigen Mantel 13 so verbunden, dass bei einer Rotation des doppelwandigen Mantels 13 die Torsionsfeder 7 gespannt, respektive entspannt wird. Der doppelwandige Mantel 13 weist dazu eine Torsionsfederhalterung 13d auf (nicht ersichtlich). Damit wird der zweite Teil des Energiespeichers, welcher den Zeitgeber speist, geladen.

In der Figur 11b ist im Unterschied zur Figur 11a ein Schnitt entlang einer Symmetrieachse des Lösemittelbehälters 3 durch die Vorrichtung 1 b gemäss eines zweiten Aspekts bei nicht aktiviertem Zeitgeber sowie von der gegenüberliegenden Seite dargestellt. Insbesondere ist in der Figur 11b die Torsionsfeder 7 und den durch die Hebevorrichtung angehobenen Extraktionsgut-Behälter 4 ersichtlich. Die Torsionsfeder 7 ist in der Figur 11a im Wesentlichen entspannt, was wiederum nicht durch dessen axiale Dehnung interpretiert werden kann, sondern aus der Tatsache, dass der Extraktionsgut-Behälter 4 angehoben ist.

Weiter ist in der Figur 11b ein zweites Betätigungselement 14b ersichtlich, auf welche in den nachfolgenden Figuren näher eingegangen wird.

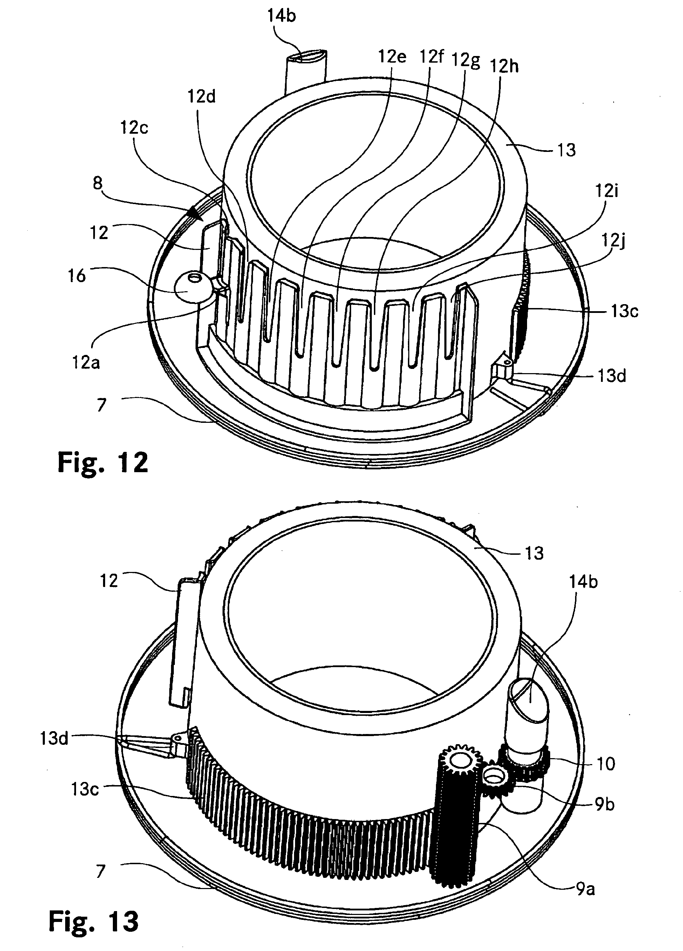

In der Figur 12 ist eine schematische Darstellung einer Schrägansicht des doppelwandigen Mantels 13, des zweiten Betätigungselements 14b, der Kulisse 12, der Glocke 16 und der Torsionsfeder 7 im Zusammenbau gemäss eines zweiten Aspekts bei aktiviertem Zeitgeber dargestellt.

Nachfolgend sei der Zeitgeber gemäss eines zweiten Aspekts anhand der Figur 13 erklärt. Der doppelwandige Mantel 13 weist ein hervorstehendes Zahnstangenprofil 13c auf, welches axial über einen Bereich der Aussenfläche des Aussenmantels 13a verläuft, wobei der Bereich eine in axialer Richtung orientierte Höhe h hat. Alternativ kann das Profil auch als Rillen, respektive Aussparungen ausgebildet sein. Ein erstes Zahnrad 9a greift mit seinen Zähnen in das Zahnstangenprofil 13c ein, wobei eine Achse des ersten Zahnrads 9a parallel zu einer Längsachse des doppelwandigen Mantels 13 verläuft und über den Bodenbereich 17 und die Abdeckung 15 rotierbar gelagert ist (hier nicht sichtbar). Das erste Zahnrad 9a weist eine Höhe auf, welche im Bereich der Summe der maximalen Hubhöhe des Extraktionsgut-Behälters 4 und der Höhe h liegt. Ein zweites Zahnrad 9b, welches im Verhältnis zum ersten Zahnrad 9a eine geringe Höhe aufweist, wirkt mit dem ersten Zahnrad 9a zusammen und weist damit eine Rotationsachse parallel zu derjenigen des ersten Zahnrades 9a auf und ist über die Abdeckung 15 rotierbar gelagert (hier nicht sichtbar). Das zweite Betätigungselement 14b umfasst ein gehemmtes Zahnrad 10 welches mit dem zweiten Zahnrad 9b zusammenwirkt. Das gehemmte Zahnrad 10 ist axial, entgegen einer Federkraft, verschiebbar gehaltert, so dass bei einer Betätigung desselben das gehemmte Zahnrad 10 axial so verschoben wird, dass dasselbe nicht mehr mit dem Zahnrad 9b zusammenwirkt (hier nicht sichtbar). Damit kann durch die Betätigung des zweiten Betätigungselements 14b der Zeitgeber unterbrochen, respektive wieder auf Null gestellt werden. Eine Bremseinrichtung des gehemmten Zahnrades 10 umfasst dazu eine Achse, welche mit dem gehemmten Zahnrad 10 verbunden ist und in einer Lagerbuchse, in Silikon oder etwas Äquivalentem gehemmt gelagert ist. Dazu ist die Lagerbuchse mit einem O-Ring abgedichtet, so dass der Silikon nicht ausläuft oder oxidiert. Die mechanische Hemmung ist im Aufsatz 2b gegenüber dem Lösemittelbehälter 3 thermisch isoliert angeordnet, so dass bei Temperaturschwankungen des Lösemittels eine eingestellte Zeitspanne nicht oder nur geringfügig beeinflusst wird. Dazu könnte auch Isoliermaterial, welches im Aufsatz 2b die mechanische Hemmung abschirmt, vorgesehen sein (nicht dargestellt).

In einem unteren Randbereich des doppelwandigen Mantels 13 ist eine Torsionsfederhalterung 13d, welche mit der Torsionsfeder 7 verbunden ist, wobei das andere Ende der Torsionsfeder 7 auf nicht dargestellte Art mit dem Bodenbereich 17 verbunden ist, ersichtlich. Ist die Torsionsfeder 7 durch eine Rotation des doppelwandigen Mantels 13 (zweite Betätigungsrichtung) gespannt, so hemmt das gehemmte Zahnrad 10 ein Entspannen derselben, so dass eine Rotation entgegen der zweiten Betätigungsrichtung verlangsamt ist. Über die Winkelgeschwindigkeit die der doppelwandige Mantel 13 damit erreicht, kann eine Zeitskala eruiert werden. Die Zeitspanne kann dann über einen Drehwinkel des doppelwandigen Mantels 13 erfolgen und ist im Wesentlichen proportional zum Drehwinkel. Soll die eingestellte Zeitspanne vorzeitig ablaufen, wird das zweite Betätigungselement 14b betätigt, womit die Hemmung entkoppelt und der doppelwandige Mantel 13 im Wesentlichen ungehemmt in eine Position zurückrotiert, in welcher die Torsionsfeder 7 entspannter ist.

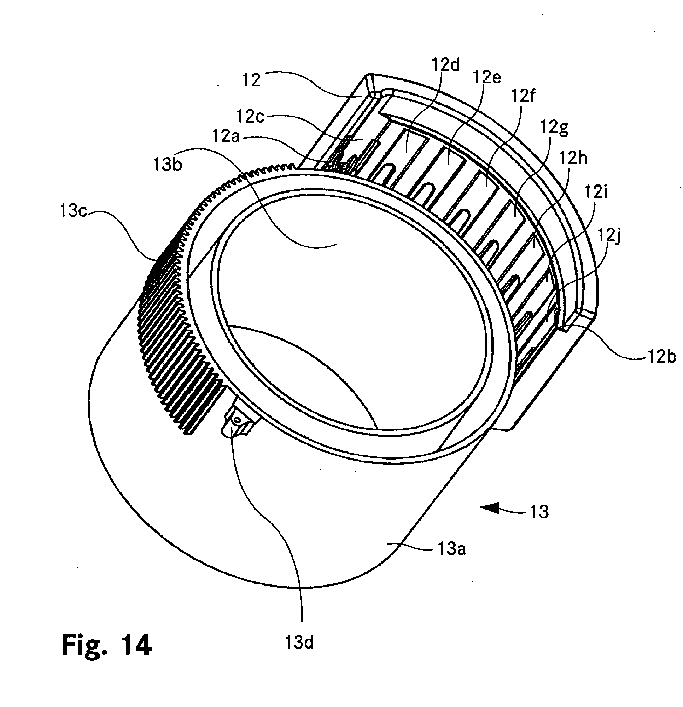

In der Figur 12 ist eine Kulisse 12 ersichtlich, welche im Wesentlichen als Zylindermantelsegment mit einem Radius im Bereich des Radius des Aussenmantels 13a des doppelwandigen Mantels 13 ausgebildet ist. Die Fläche und die Form der Kulisse 12 entsprechen dabei mindestens der von dem Zahnstangenprofil 11 beanspruchten Fläche und Form. Die Kulisse 12 ist mit im Wesentlichen konstantem, kleinem Abstand, parallel zum Aussenmantel 13a des doppelwandigen Mantels 13 angeordnet und mit dem Bodenbereich 17 verbunden. Die Kulisse 12 weist auf der konkaven, dem doppelwandigen Mantel 13 zugewandten Seite in axialer Richtung eine Nut 12c auf, welche unten, im Bereich des Bodenbereichs 17, in einem Absatz 12b austritt, welcher die Kulisse 12 innseitig umläuft (siehe Figur 14). Weitere Nuten 12d - 12j, parallel zur Nut 12c und zueinander beabstandet angeordnet weisen in Richtung des Absatzes 12b eine abnehmende Tiefe auf und münden im Absatz 12b. Statt die Nuten 12d - 12j mit abnehmender Tiefe auszubilden, kann auch die Kulisse 12 in einem entsprechenden Winkel verschwenkt angeordnet sein um denselben Effekt zu erreichen.

Ein vorstehendes Element 8 (nicht sichtbar), verbunden mit dem Aussenmantel 13a des doppelwandigen Mantels 13 wird durch eine der Nuten 12c - 12j der Kulisse 12 geführt. Das vorstehende Element 8 kann federnd ausgebildet sein. Anderseits kann auch die Kulisse 12 federnd ausgebildet sein. Ein federndes Element 12a ist axial in der Nut 12c mit der Kulisse 12 verbunden und ragt teilweise in die Nut 12c hinein und rückseitig mit einem Bereich aus der Kulisse 12 hinaus, wobei dessen federnde Wirkung radial gerichtet ist. Eine Glocke 16 ist radial, in kleinem Abstand von dem Bereich so in der Abdeckung 15 gehaltert (nicht ersichtlich), dass das vorstehende Element 8 auf seiner durch die Nut 12c geführten Bahn mit dem federnden Element 12a kollidiert, womit das federnde Element 12a gespannt wird und so entweder beim Spannen oder Entspannen des federnde Elements 12a die Glocke 16 anschlägt.

Nachfolgend sei anhand der Figuren die Funktion der Vorrichtung 1 b über den chronologischen Ablauf beschrieben. In Figur 11b ist der Zeitgeber (noch) nicht aktiviert. Das Betätigungselement wird nun so gegen den Uhrzeigersinn rotiert, dass das vorstehende Element 8 durch den Absatz 12b geführt ist (Figur 11a). Durch die Rotation wird die Torsionsfeder 7 gespannt. Je nach Rotationswinkel wird gleichzeitig und im Wesentlichen proportional zum Rotationswinkel die Zeitspanne eingestellt. Alternativ kann die Vorrichtung 1 b auch so ausgebildet sein, dass die Einstellung der Zeitspanne im Uhrzeigersinn erfolgt. Der Extraktionsgut-Behälter 4 wird nun nach unten gepresst, wobei die Schraubenfeder 6 gespannt wird. Während dessen ist das vorstehende Element 8, je nach eingestellter Zeitdauer in einer der Nuten 12c - 12j der Kulisse 12 geführt, das heisst, während dem Absenken des Extraktionsgut-Behälters 4 ist derselbe bezüglich des Lösemittelbehälters 3 verdrehgesichert. Bei ausreichendem Absenken des Extraktionsgut-Behälters 4 schnappt das vorstehende Element 8 in den Absatz 12b ein und gelangt damit in einen in die zweite Betätigungsrichtung geführten Bereich. In dieser Position ist der Extraktionsgut-Behälters 4 nicht mehr verdrehgesichert. Anschliessend, nach dem Loslassen entspannt sich die Torsionsfeder 7 gehemmt durch das gehemmte Zahnrad 10. Währenddessen ist der doppelwandige Mantel 13 durch das vorstehende Element 8 durch den Absatz 12b geführt. Nach der Zeitspanne erreicht das vorstehende Element 8 die Nut 12c der Kulisse 12 und wird mittels der in der Schraubenfeder 6 gespeicherten Energie in axialer Richtung gehoben, womit der Extraktionsgut-Behälter 4 in dem Innenraum des Lösemittelbehälters 3 angehoben wird. Schliesslich kollidiert das vorstehende Element 8 mit dem federnden Element 12a und schlägt über den Bereich des federnden Elements 12a die Glocke 16 an, womit dem Benutzer signalisiert wird, dass das Extraktionsgetränk, insbesondere bezüglich der Extraktionszeitspanne, fertig zubereitet ist.

Nachfolgend sei ein Ablauf des Verfahrens detailliert erläutert:
a) Zur Aufbewahrung der Vorrichtung 1b zur zeitgesteuerten Zubereitung eines Extraktionsgetränks 1 (nachfolgend Vorrichtung 1b) ist der Extraktionsgut-Behälter 4 um Platz zu sparen in abgesenktem Zustand. Dazu ist eine zusätzliche oder die obig beschriebene Verriegelungsvorrichtung, insbesondere ein Bajonettverschluss vorgesehen. Zum Beispiel könnte dazu über das zweite Betätigungselement 14b das gehemmte Zahnrad 10, oder der doppelwandige Mantel 13 bezüglich einer Rotation blockierbar ausgebildet sein. Nachdem die Vorrichtung 1 b hervorgeholt wurde, wird diese Verriegelung entriegelt, womit der Extraktionsgut-Behälter aus dem Lösmittelbehälter angehoben wird.
b) Der Deckel 5 wird abgenommen.
c) Der Extraktionsgut-Behälter 4 wird an dem auskargenden Zylindermantel 4b aus dem doppelwandigen Mantel 13 gezogen auf die gewünschte Länge ausgezogen (je nach gewünschtem Lösemittelvolumen).
d) Der Extraktionsgut-Behälter 4 wird mit dem Extraktionsgut gefüllt und wieder in den doppelwandigen Mantel 13 eingesetzt.
e) Das Extraktionsgut wird mit dem Lösemittel übergossen. Alternativ kann auch der Aufsatz 2b abgenommen werden und das Lösmittel direkt in den Lösemittelbehälter 3 eingefüllt werden.
f) Der Deckel 5 wird aufgesetzt.
g) Durch eine Rotation des Betätigungselements 14a in die zweite Betätigungsrichtung, entgegen einer Kraft der Torsionsfeder 7, wird eine gewünschte Zeitdauer eingestellt. Dabei wird das vorstehende Element 8 in eine der Nuten 12c - 12j, zum Beispiel in die Nut 12e eingerastet, wobei die Nuten 12c - 12j jeweils einer Zeitspanne entsprechen.
h) Das Betätigungselement 14a wird nun in die erste Betätigungsrichtung betätigt, wobei der doppelwandige Mantel 13 mittels des vorstehenden Elements 8 in der Nut 12e geführt ist. Die Tiefe der Nut 12e nimmt in der ersten Betätigungsrichtung ab und mündet im Absatz 12b, womit bei der Betätigung das vorstehende Element 8 in den Absatz 12b einschnappt und damit in Gegenrichtung fixiert ist, wobei die Schraubenfeder 6 das vorstehende Element 8 gegen den Absatz 12b presst.
i) Anschliessend wird das Betätigungselement 14a losgelassen. Während der durch die Wahl der Nut 12e bestimmten Zeitspanne rotiert nun das Betätigungselement 14a durch die beaufschlagte Kraft der Torsionsfeder 7 und gehemmt durch die mechanische Hemmung entgegen der zweiten Betätigungsrichtung bis zum Erreichen der Mündung der Nut 12c.
j) Bei der Mündung in die Nut 12c ändert sich die Bewegungsrichtung des Betätigungselements 14a von der bisherigen Rotationsbewegung in eine axiale Bewegung entgegen der ersten Betätigungsrichtung, womit das vorstehende Element 8 durch die Nut 12c geführt und durch die in der Schraubenfeder 6 gespeicherten Energie bewegt wird. Beim Durchlaufen der Nut 12c kontaktiert das vorstehende Element 8 das federnde Element 12a, welches wiederum die Glocke 16 anschlägt und damit dem Benutzer signalisiert, dass das Extraktionsgetränk fertig zubereitet ist.
k) Zum Reinigen der Vorrichtung 1b kann nun der Deckel 5 abgenommen, der Extraktionsgut-Behälter 4 herausgehoben und abgewaschen werden. Weiter kann der Aufsatz 2b vom Lösemittelbehälter 3 abgehoben werden, womit der Lösemittelbehälter auch abgewaschen werden kann. Anschliessend wird die Vorrichtung 1b wieder zusammengesetzt, das Betätigungselement 14a in die erste Betätigungsrichtung betätigt und mittels des Bajonettverschlusses (nicht sichtbar) verriegelt, so das die Vorrichtung 1b platzsparend versorgt werden kann.

Es kann aber auch zuerst die Betätigung in die erste Betätigungsrichtung und danach die Einstellung der Zeitspanne in die zweite Betätigungsrichtung erfolgen. Die Kulisse 12 kann auch ohne die Nuten 12d - 12j ausgebildet sein. Damit könnte die Zeitspanne kontinuierlich eingestellt werden. Anderseits wäre damit bei einer vorgängigen oder simultanen Einstellung der Zeitspanne die Betätigung des Betätigungselements 14a in die erste Betätigungsrichtung nicht geführt, womit insbesondere eine vorgängig eingestellte Zeitspanne sich durch eine zu wenig präzise Betätigung des Betätigungselements 14a in die erste Betätigungsrichtung verändern kann.

Die Ausführungen der Extraktionsgutbehälter 200, 4 und die Lösemittelbehälter 3 gemäss den beiden Ausführungsformen müssen sich im Wesentlichen nicht unterscheiden. Insbesondere können sie identisch ausgeführt sein. Zum Beispiel weisen die Extraktionsgutbehälter 200, 4 in beiden Ausführungsformen eine zweiteilige Form auf, welche teleskopartig ineinander geführt und in unterschiedlichen axialen Positionen verrastet werden können. Auch die Aufsätze 2a, 2b können Ähnlichkeiten aufweisen, wobei nachfolgend lediglich beispielhaft einige, welche sich jedoch nur auf die obig beschriebenen Ausführungsformen beziehen, beschrieben sind.

Zum Beispiel wird in den obig beschriebenen Ausführungsformen ein Extraktionsgutbehälter 200, 4 jeweils von oben in den Aufsatz 2a, 2b eingeführt. Der Extraktionsgutbehälter 200, 4 ist jeweils von oben her befüllbar, wird mit einem Deckel 300 (Zeitgeber), 5 verschlossen und weist einen Flansch auf, über welchen er in einer doppelwandige Hülse 400, 13 gehalten wird. Die doppelwandige Hülse 400, 13 wird jeweils mit einer Spiraldruckfeder beaufschlagt. Der Extraktionsgutbehälter 200, 4 wird zusammen mit der doppelwandigen Hülse 400, 13 linear nach unten, entgegen einer Federkraft der Spiraldruckfeder 409, 6 in die Brühstellung überführt und dort verriegelt. Die Verriegelungsvorrichtung umfasst jeweils ein mit der doppelwandigen Hülse 400, 13 fest verbundenes Element 407, 8, welches in verriegeltem Zustand durch ein bezüglich dem Aufsatz 2a, 2b axial fix angeordnetes Element 524, 12 zusammenwirkt und so ein entspannen der Spiraldruckfeder 409, 6, respektive ein Anheben der doppelwandigen Hülse 400, 13 und damit des Extraktionsgutbehälter 200, 4 verhindern kann. Der Aufsatz 2a, 2b umfasst ein während der Zeitspanne koaxial zum Extraktionsgutbehälter 200, 4 rotierendes Element 303, 8, womit nach Ablauf der Zeitspanne die Verriegelungsvorrichtung entriegelt wird. Eine Zeitspanne wird im Bereich des Deckels 300, 5 eingestellt. Nach Ablauf der Zeitspanne wird der Extraktionsgutbehälter 200, 4 mittels der in der Spiraldruckfeder 409, 6 gespeicherten Energie linear nach oben geführt.

Die obigen Gemeinsamkeiten sind lediglich beispielhaft und nicht abschliessend, da in diesem Sinne Gemeinsamkeiten nicht scharf definiert werden können. Weitere Ausführungsformen können auch mehr oder weniger Gemeinsamkeiten zu einer der beiden Ausführungsformen aufweisen, insbesondere ist die Erfindung nicht auf die beiden Ausführungsformen beschränkt.

Ein Unterschied zwischen den beiden Ausführungsformen des Aufsatzes 2a, 2b besteht darin, dass bei der ersten Ausführungsform der Zeitgeber im Deckel 300 integriert ist, während in der zweiten Ausführungsform der Zeitgeber im Aufsatz 2b integriert ist.

Zusammenfassend ist festzustellen, dass durch den Aufsatz gemäss des ersten und des zweiten Aspekts der Erfindung eine einfach zu bedienende Vorrichtung zur zeitgesteuerten Zubereitung eines Extraktionsgetränks geschaffen wird, welche zudem konstruktiv einfach und kostengünstig hergestellt werden kann.

## Patentansprüche

1. Aufsatz (2a; 2b) für einen Lösemittelbehälter (3) zur zeitgesteuerten Zubereitung eines Extraktionsgetränks, insbesondere zum Brühen von Tee, mit
a) einer Grundplatte (500) zum Aufsetzen auf eine Öffnung des Lösemittelbehälters (3), wobei
b) die Grundplatte (500) einen Durchbruch (511) für den Durchtritt eines Extraktionsgutbehälters (200; 4) aufweist, und
c) eine Hebevorrichtung vorhanden ist, welche eine Hülse (400; 13) umfasst, an welcher der Extraktionsgutbehälter (200; 4) derart gehaltert ist, dass er an einem unteren Ende über die Hülse (400; 13) übersteht und durch eine obere Öffnung der Hülse (400; 13) mit einem Extraktionsgut befüllt werden kann, wobei
d) die Hebevorrichtung eine grundplattenfeste Führungsvorrichtung aufweist, an welcher die Hülse (400; 13) in weitgehend grundplattensenkrechter Richtung im Sinne einer Linearführung (405, 515) zwischen einer unteren und einer oberen Position verschiebbar geführt ist, wobei
e) die untere Position eine Brühstellung der Hülse (400; 13) definiert, in welcher der Extraktionsgutbehälter (200; 4) abgesenkt ist und die obere Position eine Ruhestellung definiert, in welcher der Extraktionsgutbehälter (200; 4) gegenüber der Brühstellung angehoben ist, und
f) die Hebevorrichtung eine Verriegelungsvorrichtung zum Verriegeln der Hülse (400; 13) in der Brühstellung aufweist, und
g) ein Zeitgeber (300) vorhanden ist, welcher derart zur Betätigung der Verriegelungsvorrichtung ausgebildet ist, dass nach Ablauf einer vorgebbaren Zeitspanne die Hülse (400; 13) entriegelt wird, wenn sie in der Brühstellung verriegelt ist, wobei
h) der Zeitgeber ein Betätigungselement (302) zur Einstellung einer Zeitspanne umfasst,
**dadurch gekennzeichnet, dass**
i) die Hülse (400; 13) in der Brühstellung längs der Linearführung (405, 515) von einer Rückstellkraft beaufschlagt ist, welche sie aus der Brühstellung in die Ruhestellung zurückstellt, wenn die Hülse (400; 13) entriegelt ist.

2. Aufsatz (2a; 2b) nach Anspruch 1, **dadurch gekennzeichnet, dass** die Rückstellkraft von einem elastischen Element (409; 6) bereitgestellt wird, das zwischen der Grundplatte (500) und der Hülse (400;13) wirkt, welches elastische Element (409; 6) vorzugsweise eine Feder (409; 6), insbesondere eine Spiralfeder (409; 6), bevorzugt eine Spiraldruckfeder (409; 6) umfasst.

3. Aufsatz (2a; 2b) nach einem der Ansprüche 1 bis 2, **dadurch gekennzeichnet, dass** der Extraktionsgutbehälter (200; 4) in die Hülse (400; 13) einsetzbar ist und als einseitigen Anschlag in einem oberen Bereich einen Flansch (221; 4b) umfasst.

4. Aufsatz (2a; 2b) nach einem der Ansprüche 1 bis 3, **dadurch gekennzeichnet, dass** der Extraktionsgutbehälter (200; 4) ein Siebteil (210; 4a) und ein Halteteil (220; 4b) umfasst, wobei das Siebteil (210; 4a) koaxial im Halteteil (220; 4b) in mehreren axialen Positionen verrastbar ist.

5. Aufsatz (2a; 2b) nach Anspruch 1 bis 4, **dadurch gekennzeichnet, dass** der Extraktionsgutbehälter (200; 4) bei einem Übergang von der Ruhestellung in die Brühstellung der Hülse (400; 13) von oben her durch den Durchbruch (511) abgesenkt wird.

6. Aufsatz (2a; 2b) nach einem der Ansprüche 1 bis 5, **dadurch gekennzeichnet, dass** die Hülse (400; 13) direkt von einem Benutzer gegen die Rückstellkraft aus der Ruhestellung in die Brühstellung absenkbar ist, wo die Hülse (400; 13) automatisch verriegelt wird.

7. Aufsatz (2a; 2b) nach einem der Ansprüche 1 bis 6, **dadurch gekennzeichnet, dass** sämtliche konstruktiven Elemente der Hebevorrichtung bezüglich der axialen Richtung ausserhalb der Hülse (400; 13) angeordnet sind.

8. Aufsatz (2a; 2b) nach einem der Ansprüche 1 bis 7, **dadurch gekennzeichnet, dass** die Führungsvorrichtung eine an der Grundplatte (500) am Durchbruch (511) vorhandene Führungshülse (520; 19) umfasst, an welcher die Hülse (400; 13) verschiebbar geführt ist, wobei ein Innenraum der Führungshülse (520; 19) mit dem Durchbruch (511) der Grundplatte (500) kommuniziert und bevorzugt in der Ruhestellung den Extraktionsgutbehälter (200; 4) wenigstens teilweise aufnimmt.

9. Aufsatz (2a; 2b) nach Anspruch 8, **dadurch gekennzeichnet, dass** die Hülse (400; 13) einen im Wesentlichen runden Rohrstutzen bildet.

10. Aufsatz (2a; 2b) nach Anspruch 9, **dadurch gekennzeichnet, dass** die Hülse (400; 13) doppelwandig ausgebildet ist, wobei ein Zwischenraum zwischen der Doppelwand (401, 402; 13a, 13b) nach unten offen und nach oben weitgehend abgeschlossen ist, und die Hülse (400; 13) derart über die Führungshülse (520; 19) gestülpt angeordnet ist, dass sich die Führungshülse (520; 19) zumindest in der Brühstellung im Zwischenraum zwischen der Doppelwand (401, 402; 13a, 13b) befindet.

11. Aufsatz (2a) nach einem der Ansprüche 1 bis 10, **dadurch gekennzeichnet, dass** die Führungsvorrichtung grundplattenfeste Führungsschienen (513) umfasst, welche grundplattensenkrecht angeordnet sind und an welchen die Hülse (400) mit nach aussen auskragenden, hülsenfesten, flanschartigen Vorsprüngen gleitend geführt ist.

12. Aufsatz (2a) nach einem der Ansprüche 1 bis 11, **dadurch gekennzeichnet, dass** die Verriegelungsvorrichtung ein Betätigungselement (523) aufweist, welches derart ausgebildet und angeordnet ist, dass es mit dem Zeitgeber (300) zusammenwirken kann.

13. Aufsatz (2a) nach einem der Ansprüche 1 bis 12, **dadurch gekennzeichnet, dass** die Verriegelungsvorrichtung einen an der Grundplatte (500) verankerten, insbesondere schwenkbar gelagerten, ersten Rasthaken (524) aufweist, welcher derart angeordnet ist, dass er mit einem Rastelement (407) der Hülse (400) verrastet, wenn die Hülse (400) in der Brühstellung ist, wobei vorzugsweise das Rastelement (407) der Hülse (400) einen zweiten Rasthaken (407) umfasst, der insbesondere fest mit der Hülse (400) verbunden, vorzugsweise angeformt ist, wobei insbesondere das Betätigungselement (523) einen Hebelarm umfasst, welcher mit dem ersten Rasthaken (524) verbunden ist.

14. Aufsatz (2a) nach Anspruch 13, **dadurch gekennzeichnet, dass** der erste Rasthaken (524) derart mit einer Rückstellkraft beaufschlagt ist, dass das Rastelement (407) der Hülse (400) automatisch mit dem Rasthaken (524) verrastet, wenn die Hülse (400) in die Brühstellung gelangt.

15. Aufsatz (2a) nach einem der Ansprüche 12 bis 14, **dadurch gekennzeichnet, dass** der Zeitgeber (300) ein Auslöseelement (303) aufweist, welches während des Ablaufs der vorgebbaren Zeitspanne kontinuierlich bewegt ist und nach Ablauf der vorgebbaren Zeitspanne derart mit dem Betätigungselement der Verriegelungsvorrichtung zusammenwirkt, dass die Hülse (400) entriegelt wird, wenn sie in der Brühstellung verriegelt ist.

16. Aufsatz (2a) nach einem der Ansprüche 12 bis 15, **dadurch gekennzeichnet, dass** das Betätigungselement der Verriegelungsvorrichtung an einen oberen Randbereich der Hülse (400) heranreicht, wenn die Hülse (400) in der Brühstellung ist, und der Zeitgeber (300) als, bevorzugt abnehmbarer, Deckel für die obere Öffnung des Extraktionsgutbehälters (200) ausgebildet ist.

17. Aufsatz (2a) nach Anspruch 16, **dadurch gekennzeichnet, dass** das Betätigungselement der Verriegelungsvorrichtung in eine Aussparung (403) in den oberen Randbereich der Hülse (400) reicht, in welcher auch das Auslöseelement (303) des Zeitgebers (300) angeordnet ist, wenn der Zeitgeber (300) auf die Hülse (400) aufgesetzt ist, wobei die Aussparung (403) insbesondere nach oben offen ist, sodass das Auslöseelement (303) nach oben aus der Aussparung (403) ausgebracht werden kann, wenn der Zeitgeber (300) von der Hülse (400) abgenommen wird.

18. Aufsatz (2a) nach Anspruch 10 in Verbindung mit dem Anspruch 17, **dadurch gekennzeichnet, dass** die Aussparung (403) nur an einer Innenwand der Hülse (400) ausgebildet ist, wobei insbesondere die Führungshülse (520) eine entsprechende Aussparung (521, 522) aufweist, welche vollständig überlappend mit der Aussparung (403) der Hülse (400) angeordnet ist, wenn die Hülse (400) in der Brühstellung ist.

19. Aufsatz (2a; 2b) nach einem der Ansprüche 1 bis 18, **dadurch gekennzeichnet, dass** eine zum Aufsetzen auf den Lösemittelbehälter (3) vorgesehene Seite der Grundplatte (500) weitgehend eben ausgebildet ist und die gegenüberliegende Seite der Grundplatte (500) von einer Kalotte (600; 15) überspannt ist, sodass sich zwischen Grundplatte (500) und Kalotte (600; 15) ein Hohlkörper ergibt, in welchem die Komponenten der Längsführung und der Hebevorrichtung ganz oder teilweise untergebracht sind, wobei insbesondere der Durchbruch (511) der Grundplatte (500) sich durch die Kalotte (600; 15) fortsetzt, sodass die Hülse (400; 13) in der Ruhestellung nach oben aus der Kalotte (600; 15) übersteht.

20. Aufsatz (2b), nach Anspruch 1, zum Aufsetzen auf einen Lösemittelbehälter (3) umfassend:
a. eine Grundplatte zum Aufsetzen auf eine Öffnung des Lösemittelbehälters (3);
b. einen Extraktionsgut-Behälter (4);
c. eine an der Grundplatte angebrachte Hebevorrichtung für den Extraktionsgut-Behälter (4); wobei
d. die Hebevorrichtung derart ausgebildet und angeordnet ist, dass die Hebevorrichtung den Extraktionsgut-Behälter (4) aus einem in einen Innenraum des Lösemittelbehälters (3) abgesenkten Zustand anheben kann, wenn der Aufsatz auf den Lösemittelbehälter (3) aufgesetzt ist;
e. eine Verriegelungsvorrichtung zum Ver- und Entriegeln der Hebevorrichtung bei abgesenktem Zustand des Extraktionsgut-Behälters (4);
f. einen Zeitgeber welcher mit der Verriegelungsvorrichtung derart zusammenwirken kann, dass die Hebevorrichtung nach einer vorgegebenen Zeitspanne entriegelt wird;
g. ein Betätigungselement (14a) mit einer Betätigungsrichtung zum Betätigen des Zeitgebers; wobei
h. der Zeitgeber einen mechanischen Energiespeicher zum Speichern einer am Betätigungselement (14a) aufgewendeten Betätigungsenergie umfasst; wobei während der vorgegebenen Zeitspanne eine Entladung des Energiespeichers erfolgt;
**dadurch gekennzeichnet, dass**
die Verriegelungsvorrichtung ein erstes Element und ein zweites Element umfasst, wobei während der Zubereitung des Extraktionsgetränks eines bezüglich des Lösemittelbehälters (3) fest angeordnet ist und das andere bezüglich des Extraktionsgutbehälters fest angeordnet ist, wobei das erste und das zweite Element so zusammenwirkend angeordnet sind, dass das erste Element durch das zweite Element während der vorgegebenen Zeitspanne in einer zweiten Betätigungsrichtung und nach Ablauf der vorgegebenen Zeitspanne in einer ersten Betätigungsrichtung beweglich geführt ist.

21. Teekrug (1a; 1b), umfassend einen Lösemittelbehälter (3) und einen Aufsatz (2a; 2b) nach einem der vorgängigen Ansprüche.

## Claims

1. An attachment (2a; 2b) for a solvent container (3) for the time-controlled preparation of an extraction beverage, in particular for brewing tea, comprising
a) a base plate (500) for placing onto an opening of the solvent container (3), wherein
b) the base plate (500) has an aperture (511) for the passage of an extraction product container (200; 4), and
c) there is a lifting device which comprises a sleeve (400; 13) on which the extraction product container (200; 4) is mounted in such a manner that it projects beyond the sleeve (400; 13) at a lower end and can be filled with an extraction product through an upper opening of the sleeve (400; 13), wherein
d) the lifting device has a guide device which is fixed on the base plate and on which the sleeve (400; 13) is guided displaceably in a direction substantially perpendicular to the base plate with the effect of a linear guide (405, 515) between a lower and an upper position, wherein
e) the lower position defines a brewing position of the sleeve (400; 13), in which the extraction product container (200; 4) is lowered, and the upper position defines an inoperative position in which the extraction product container (200; 4) is raised in relation to the brewing position, and
f) the lifting device has a locking device for locking the sleeve (400; 13) in the brewing position, and
g) there is a timer (300) which is designed in such a manner for actuating the locking device that, after a predefinable period of time has elapsed, the sleeve (400; 13) is unlocked when it is locked in the brewing position, wherein
h) the timer comprises an actuating element (302) for setting a period of time,
**characterized in that**
i) the sleeve (400; 13) is acted upon along the linear guide (405, 515) in the brewing position by a restoring force which resets the sleeve from the brewing position into the inoperative position when the sleeve (400; 13) is unlocked.

2. The attachment (2a; 2b) as claimed in claim 1, **characterized in that** the restoring force is provided by an elastic element (409; 6) which acts between the base plate (500) and the sleeve (400; 13), which elastic element (409; 6) preferably comprises a spring (409; 6), in particular a spiral spring (409; 6), preferably a spiral compression spring (409; 6).

3. The attachment (2a; 2b) as claimed in either of claims 1 and 2, **characterized in that** the extraction product container (200; 4) is insertable into the sleeve (400; 13) and comprises a flange (221; 4b) as a stop on one side in an upper region.

4. The attachment (2a; 2b) as claimed in one of claims 1 to 3, **characterized in that** the extraction product container (200; 4) comprises a strainer part (210; 4a) and a holding part (220; 4b), wherein the strainer part (210; 4a) is latchable coaxially in the holding part (220; 4b) in a plurality of axial positions.

5. The attachment (2a; 2b) as claimed in claims 1 to 4, **characterized in that** the extraction product container (200; 4) is lowered from above through the aperture (511) during a transfer from the inoperative position into the brewing position of the sleeve (400; 13).

6. The attachment (2a; 2b) as claimed in one of claims 1 to 5, **characterized in that** the sleeve (400; 13) is lowerable directly by a user counter to the restoring force from the inoperative position into the brewing position where the sleeve (400; 13) is automatically locked.

7. The attachment (2a; 2b) as claimed in one of claims 1 to 6, **characterized in that** all of the structural elements of the lifting device are arranged outside the sleeve (400; 13) with respect to the axial direction.

8. The attachment (2a; 2b) as claimed in one of claims 1 to 7, **characterized in that** the guide device comprises a guide sleeve (520; 19) which is present at the aperture (511) on the base plate (500) and on which the sleeve (400; 13) is guided displaceably, wherein an interior space of the guide sleeve (520; 19) communicates with the aperture (511) of the base plate (500) and, in the inoperative position, preferably at least partially receives the extraction product container (200; 4).

9. The attachment (2a; 2b) as claimed in claim 8, **characterized in that** the sleeve (400; 13) forms a substantially round connecting pipe.

10. The attachment (2a; 2b) as claimed in claim 9, **characterized in that** the sleeve (400; 13) is of double-walled design, wherein an intermediate space between the double wall (401, 402; 13a, 13b) is downwardly open and is upwardly substantially closed, and the sleeve (400; 13) is arranged pulled over the guide sleeve (520; 19) in such a manner that, at least in the brewing position, the guide sleeve (520; 19) is located in the intermediate space between the double wall (401, 402; 13a, 13b).

11. The attachment (2a) as claimed in one of claims 1 to 10, **characterized in that** the guide device comprises guide rails (513) which are fixed on the base plate, are arranged perpendicularly to the base plate and on which the sleeve (400) is guided in a sliding manner by outwardly projecting, flange-like projections fixed on the sleeve.

12. The attachment (2a) as claimed in one of claims 1 to 11, **characterized in that** the locking device has an actuating element (523) which is designed and arranged in such a manner that it can interact with the timer (300).

13. The attachment (2a) as claimed in one of claims 1 to 12, **characterized in that** the locking device has a first latching hook (524) which is anchored on the base plate (500), is in particular mounted pivotably and is arranged in such a manner that it latches with a latching element (407) of the sleeve (400) when the sleeve (400) is in the brewing position, wherein the latching element (407) of the sleeve (400) preferably comprises a second latching hook (407) which is in particular connected fixedly to the sleeve (400) and is preferably integrally formed thereon, wherein the actuating element (523) in particular comprises a lever arm which is connected to the first latching hook (524).

14. The attachment (2a) as claimed in claim 13, **characterized in that** the first latching hook (524) is acted upon with a restoring force in such a manner that the latching element (407) of the sleeve (400) automatically latches to the latching hook (524) when the sleeve (400) passes into the brewing position.

15. The attachment (2a) as claimed in one of claims 12 to 14, **characterized in that** the timer (300) has a triggering element (303) which is moved continuously during the countdown of the predefinable period of time and, after the predefinable period of time has elapsed, interacts with the actuating element of the locking device in such a manner that the sleeve (400) is unlocked when it is locked in the brewing position.

16. The attachment (2a) as claimed in one of claims 12 to 15, **characterized in that** the actuating element of the locking device reaches up to an upper edge region of the sleeve (400) when the sleeve (400) is in the brewing position, and the timer (300) is designed as a preferably removable cover for the upper opening of the extraction product container (200).

17. The attachment (2a) as claimed in claim 16, **characterized in that** the actuating element of the locking device reaches into a cutout (403) in the upper edge region of the sleeve (400), in which cutout the triggering element (303) of the timer (300) is also arranged when the timer (300) is placed onto the sleeve (400), wherein the cutout (403) is in particular upwardly open such that the triggering element (303) can be brought upward out of the cutout (403) when the timer (300) is removed from the sleeve (400).

18. The attachment (2a) as claimed in claim 10 in conjunction with claim 17, **characterized in that** the cutout (403) is only formed on an inner wall of the sleeve (400), wherein the guide sleeve (520) in particular has a corresponding cutout (521, 522) which is arranged completely overlapping with the cutout (403) of the sleeve (400) when the sleeve (400) is in the brewing position.

19. The attachment (2a; 2b) as claimed in one of claims 1 to 18, **characterized in that** a side of the base plate (500), which side is provided for placing onto the solvent container (3), is of substantially planar design, and the opposite side of the base plate (500) is spanned by a dome (600; 15), thus producing a hollow body between the base plate (500) and the dome (600; 15), in which hollow body the components of the longitudinal guide and of the lifting device are entirely or partially accommodated, wherein the aperture (511) of the base plate (500) in particular continues through the dome (600; 15) such that, in the inoperative position, the sleeve (400; 13) projects upward out of the dome (600; 15).

20. The attachment (2b), in particular as claimed in claim 1, for placing onto a solvent container (3), comprising:
a. a base plate for placing onto an opening of the solvent container (3);
b. an extraction product container (4);
c. a lifting device, which is attached to the base plate, for the extraction product container (4); wherein
d. the lifting device is designed and arranged in such a manner that the lifting device can raise the extraction product container (4) out of a state in which it is lowered into an interior space of the solvent container (3) when the attachment is placed onto the solvent container (3);
e. a locking device for locking and unlocking the lifting device in the lowered state of the extraction product container (4);
f. a timer which can interact with the locking device in such a manner that the lifting device is unlocked after a predefined period of time;
g. an actuating element (14a) with an actuating direction for actuating the timer; wherein
h. the timer comprises a mechanical energy accumulator for storing an actuating energy applied to the actuating element (14a); wherein the energy accumulator is discharged during the predefined period of time;
**characterized in that**
the locking device comprises a first element and a second element, wherein, during the preparation of the extraction beverage, one element is arranged fixedly with respect to the solvent container (3) and the other element is arranged fixedly with respect to the extraction product container, wherein the first and the second elements are arranged interacting in such a manner that the first element is guided by the second element in a second actuating direction during the predefined period of time and, after the predefined period of time has elapsed, is guided movably in a first actuating direction.

21. A tea kettle (1a; 1b), comprising a solvent container (3) and an attachment (2a; 2b) as claimed in one of the preceding claims.

## Revendications

1. Garniture (2a; 2b) pour un récipient à solvant (3) destiné à la préparation minutée d'une boisson par extraction, en particulier pour l'infusion de thé, avec
a) une plaque de base (500) à poser sur une ouverture du récipient à solvant (3), dans laquelle
b) la plaque de base (500) présente un orifice (511) pour le passage d'un récipient de produit d'extraction (200; 4), et
c) il se trouve un dispositif de levage, qui comprend un manchon (400; 13), sur lequel le récipient de produit d'extraction (200; 4) est maintenu de telle manière qu'il dépasse à une extrémité inférieure au-delà du manchon (400; 13) et qu'il puisse être rempli à travers une ouverture supérieure du manchon (400; 13) avec un produit d'extraction, dans laquelle
d) le dispositif de levage présente un dispositif de guidage solidaire de la plaque de base, sur lequel le manchon (400; 13) peut être guidé en mouvement coulissant, dans la direction largement perpendiculaire à la plaque de base, au sens d'un guidage linéaire (405, 515) entre une position inférieure et une position supérieure, dans laquelle
e) la position inférieure définit une position d'infusion du manchon (400; 13), dans laquelle le récipient de produit d'extraction (200; 4) est abaissé et la position supérieure définit une position de repos, dans laquelle le récipient de produit d'extraction (200; 4) est soulevé par rapport à la position d'infusion, et
f) le dispositif de levage présente un dispositif de verrouillage pour le verrouillage du manchon (400; 13) dans la position d'infusion, et
g) il se trouve une horloge (300), qui est conçue en vue de l'actionnement du dispositif de verrouillage, de telle manière qu'après l'expiration d'un laps de temps pré-réglable, le manchon (400; 13) soit déverrouillé, lorsqu'il est verrouillé dans la position d'infusion, dans laquelle
h) l'horloge comprend un élément d'actionnement (302) pour le réglage d'un laps de temps,
**caractérisée en ce que**
i) le manchon (400; 13) est soumis dans la position d'infusion, le long du guidage linéaire (405, 515), à une force de rappel, qui le ramène de la position d'infusion à la position de repos, lorsque le manchon (400; 13) est déverrouillé.

2. Garniture (2a; 2b) selon la revendication 1, **caractérisée en ce que** la force de rappel est fournie par un élément élastique (409; 6), qui agit entre la plaque de base (500) et le manchon (400; 13), dans laquelle ledit élément élastique (409; 6) comprend de préférence un ressort (409; 6), en particulier un ressort hélicoïdal (409; 6), en particulier un ressort hélicoïdal comprimé (409; 6).

3. Garniture (2a; 2b) selon l'une quelconque des revendications 1 à 2, **caractérisée en ce que** le récipient de produit d'extraction (200; 4) peut être inséré dans le manchon (400; 13) et comprend une bride (221; 4b) comme butée côté intérieur dans une région supérieure.

4. Garniture (2a; 2b) selon l'une quelconque des revendications 1 à 3, **caractérisée en ce que** le récipient de produit d'extraction (200; 4) comprend une partie de tamis (210; 4a) et une partie de maintien (220; 4b), dans laquelle la partie de tamis (210; 4a) peut être encliquetée coaxialement à la partie de maintien (220; 4b) dans plusieurs positions axiales.

5. Garniture (2a; 2b) selon l'une quelconque des revendications 1 à 4, **caractérisée en ce que** le récipient de produit d'extraction (200; 4) est abaissé à partir du haut à travers l'orifice (511) lors du transfert de la position de repos à la position d'infusion du manchon (400; 13).

6. Garniture (2a; 2b) selon l'une quelconque des revendications 1 à 5, **caractérisée en ce que** le manchon (400; 13) peut être abaissé directement par un utilisateur, contre la force de rappel, de la position de repos à la position d'infusion, où le manchon (400; 13) est automatiquement verrouillé.

7. Garniture (2a; 2b) selon l'une quelconque des revendications 1 à 6, **caractérisée en ce que** tous les éléments de construction du dispositif de levage sont disposés à l'extérieur du manchon (400; 13) par rapport à la direction axiale.

8. Garniture (2a; 2b) selon l'une quelconque des revendications 1 à 7, **caractérisée en ce que** le dispositif de guidage comprend un manchon de guidage (520; 19) présent sur la plaque de base (500) à l'orifice (511), sur lequel le manchon (400; 13) peut être guidé en mouvement coulissant, dans laquelle un espace intérieur du manchon de guidage (520; 19) communique avec l'orifice (511) de la plaque de base (500) et contient au moins partiellement, de préférence dans la position de repos, le récipient de produit d'extraction (200; 4).

9. Garniture (2a; 2b) selon la revendication 8, **caractérisée en ce que** le manchon (400; 13) forme un bout de tube essentiellement rond.

10. Garniture (2a; 2b) selon la revendication 9, **caractérisée en ce que** le manchon (400; 13) est réalisé à double paroi, dans laquelle un espace intérieur entre la double paroi (401, 402; 13a, 13b) est ouvert vers le bas et largement fermé vers le haut, et le manchon (400; 13) est disposé en engagement sur le manchon de guidage (520; 19) de manière telle que le manchon de guidage (520; 19) se trouve, au moins dans la position d'infusion, dans l'espace intermédiaire entre la double paroi (401, 402; 13a, 13b).

11. Garniture (2a) selon l'une quelconque des revendications 1 à 10, **caractérisée en ce que** le dispositif de guidage comprend des rails de guidage (513) solidaires de la plaque de base, qui sont disposés perpendiculairement à la plaque de base et sur lesquels le manchon (400) est guidé en glissant avec des saillies en forme d'ailes, solidaires du manchon, qui sont saillantes vers l'extérieur.

12. Garniture (2a) selon l'une quelconque des revendications 1 à 11, **caractérisée en ce que** le dispositif de verrouillage présente un élément d'actionnement (523), qui est conçu et disposé de telle manière qu'il puisse coopérer avec l'horloge (300).

13. Garniture (2a) selon l'une quelconque des revendications 1 à 12, **caractérisée en ce que** le dispositif de verrouillage présente un premier crochet d'encliquetage (524) ancré à la plaque de base (500), monté en particulier de façon pivotante, qui est disposé de telle manière qu'il s'encliquète avec un élément d'encliquetage (407) du manchon (400), lorsque le manchon (400) se trouve dans la position d'infusion, dans laquelle l'élément d'encliquetage (407) du manchon (400) comprend de préférence un deuxième crochet d'encliquetage (407), qui est en particulier solidaire du manchon (400), de préférence formé sur celui-ci, dans laquelle l'élément d'actionnement (523) comprend en particulier un bras de levier, qui est relié au premier crochet d'encliquetage (524).

14. Garniture (2a) selon la revendication 13, **caractérisée en ce que** le premier crochet d'encliquetage (524) est soumis à une force de rappel, de telle manière que l'élément d'encliquetage (407) du manchon (400) s'encliquète automatiquement avec le crochet d'encliquetage (524), lorsque le manchon (400) arrive dans la position d'infusion.

15. Garniture (2a) selon l'une quelconque des revendications 12 à 14, **caractérisée en ce que** l'horloge (300) présente un élément de déclenchement (303), qui est déplacé en continu pendant le déroulement du laps de temps pré-réglable et coopère, après l'expiration du laps de temps pré-réglable, avec l'élément d'actionnement du dispositif de verrouillage, de telle manière que le manchon (400) soit déverrouillé lorsqu'il est verrouillé dans la position d'infusion.

16. Garniture (2a) selon l'une quelconque des revendications 12 à 15, **caractérisée en ce que** l'élément d'actionnement du dispositif de verrouillage arrive jusqu'à une région de bord supérieure du manchon (400), lorsque le manchon (400) se trouve dans la position d'infusion, et l'horloge (300) est réalisée sous la forme d'un couvercle, de préférence amovible, pour l'ouverture supérieure du récipient de produit d'extraction (200).

17. Garniture (2a) selon la revendication 16, **caractérisée en ce que** l'élément d'actionnement du dispositif de verrouillage arrive dans une découpe (403) dans la région de bord supérieure du manchon (400), dans laquelle l'élément de déclenchement (303) de l'horloge (300) est également disposé, lorsque l'horloge (300) est posée sur le manchon (400), dans laquelle la découpe (403) est ouverte en particulier vers le haut, de telle manière que l'élément de déclenchement (303) puisse être retiré vers le haut à travers la découpe (403), lorsque l'horloge (300) est enlevée du manchon (400).

18. Garniture (2a) selon la revendication 10 en liaison avec la revendication 17, **caractérisée en ce que** la découpe (403) n'est formée qu'à une paroi intérieure du manchon (400), dans laquelle notamment le manchon de guidage (520) présente une découpe correspondante (521, 522), qui est disposée entièrement en recouvrement de la découpe (403) du manchon (400), lorsque le manchon (400) se trouve dans la position d'infusion.

19. Garniture (2a; 2b) selon l'une quelconque des revendications 1 à 18, **caractérisée en ce qu'**un côté de la plaque de base (500), prévu pour être posé sur le récipient à solvant (3), est largement plan et le côté opposé de la plaque de base (500) est coiffé d'une calotte (600; 15), de telle manière qu'il se forme entre la plaque de base (500) et la calotte (600; 15) une cavité dans laquelle les composants du guidage linéaire et du dispositif de levage sont entièrement ou partiellement installés, dans laquelle en particulier l'orifice (511) de la plaque de base (500) se prolonge à travers la calotte (600; 15), de telle manière que le manchon (400; 13) sorte vers le haut hors de la calotte (600; 15) dans la position de repos.

20. Garniture (2b) selon la revendication 1, à poser sur un récipient à solvant (3), comprenant:
a) une plaque de base à poser sur une ouverture du récipient à solvant (3);
b) un récipient de produit d'extraction (4);
c) un dispositif de levage installé sur la plaque de base pour le récipient de produit d'extraction (4); dans laquelle
d) le dispositif de levage est conçu et disposé de telle manière que le dispositif de levage puisse soulever le récipient de produit d'extraction (4) à partir d'un état abaissé dans un espace intérieur du récipient à solvant (3), lorsque la garniture est posée sur le récipient à solvant (3);
e) un dispositif de verrouillage pour le verrouillage et le déverrouillage du dispositif de levage dans l'état abaissé du récipient de produit d'extraction (4);
f) une horloge qui peut coopérer avec le dispositif de verrouillage, de telle manière que le dispositif de levage soit déverrouillé après un laps de temps prédéterminé;
g) un élément d'actionnement (14a) avec une direction d'actionnement pour l'actionnement de l'horloge; dans laquelle
h) l'horloge comprend un accumulateur d'énergie mécanique pour accumuler une énergie d'actionnement utilisée à l'élément d'actionnement (14a), dans laquelle une décharge de l'accumulateur d'énergie se produit pendant le laps de temps prédéterminé;
**caractérisée en ce que** le dispositif de verrouillage comprend un premier élément et un deuxième élément, dans laquelle, pendant la préparation de la boisson par extraction, l'un est fixe par rapport au récipient à solvant (3) et l'autre est fixe par rapport au récipient de produit d'extraction, dans laquelle le premier élément et le deuxième élément sont disposés en coopération de telle manière que le premier élément soit guidé en mouvement par le deuxième élément pendant le laps de temps prédéterminé dans une deuxième direction d'actionnement et après l'expiration du laps de temps prédéterminé dans une première direction d'actionnement.

21. Théière (1a; 1b), comprenant un récipient à solvant (3) et une garniture (2a; 2b) selon l'une quelconque des revendications précédentes.
